(19) Europäisches Patentamt
European Patent Office
Office européen des brevets

(11) **EP 4 644 202 A1**

(12) **EUROPEAN PATENT APPLICATION**
published in accordance with Art. 153(4) EPC

(43) Date of publication:
**05.11.2025 Bulletin 2025/45**

(21) Application number: **23908994.9**

(22) Date of filing: **31.05.2023**

(51) International Patent Classification (IPC):
**B60W 30/18** (2012.01)

(52) Cooperative Patent Classification (CPC):
**B60W 40/107; B60W 30/02; B60W 30/045;**
**B60W 30/18145; B60W 40/109; B60W 40/114;**
B60W 2520/14; B60W 2540/18; B60W 2720/30;
Y02T 10/72

(86) International application number:
**PCT/CN2023/097457**

(87) International publication number:
**WO 2024/139047 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **26.12.2022 CN 202211678720**

(71) Applicant: **BYD Company Limited**
**Shenzhen, Guangdong 518118 (CN)**

(72) Inventors:
• **YANG, Dongsheng**
**Shenzhen, Guangdong 518118 (CN)**

• **LU, Guoxiang**
**Shenzhen, Guangdong 518118 (CN)**
• **RAN, Xiao**
**Shenzhen, Guangdong 518118 (CN)**
• **LONG, Juan**
**Shenzhen, Guangdong 518118 (CN)**
• **ZHUANG, Xuli**
**Shenzhen, Guangdong 518118 (CN)**
• **GUO, Kai**
**Shenzhen, Guangdong 518118 (CN)**

(74) Representative: **Mathys & Squire**
**The Shard**
**32 London Bridge Street**
**London SE1 9SG (GB)**

(54) **VEHICLE POWER CONTROL METHOD AND DEVICE, MEDIUM, VEHICLE CONTROLLER, AND VEHICLE**

(57)     A vehicle power control method and device (800), a medium (600), a vehicle controller (700), and a vehicle (1000). The vehicle power control method comprises: if a torque vector control function is activated, determining a first torque distribution proportion of each driving wheel according to a dynamic load of each driving wheel of a vehicle; and determining a first distributed torque of a corresponding driving wheel according to a required torque of the whole vehicle and the first torque distribution proportion of each driving wheel, wherein when the corresponding driving wheel is driven according to the first distributed torque of each driving wheel and the steering wheel angle of the vehicle is a set angle, an integral area of a first curve, which is a mapping curve of the turning radius and lateral acceleration of the vehicle, is smaller than an integral area of a second curve, which is a mapping curve of the turning radius and lateral acceleration of the vehicle when the torque vector control function is not activated.

```
                                                              ┌─ S110
┌──────────────────────────────────────────────────────────┐
│ If a torque vector control function is activated,          │
│ determine a first torque allocation ratio of each driven   │
│ wheel according to a dynamic load of each driven wheel     │
│ of a vehicle                                               │
└──────────────────────────────────────────────────────────┘

┌──────────────────────────────────────────────────────────┐
│ Determine a first allocation torque of the corresponding   │
│ driven wheel according to a vehicle required torque of the │
│ vehicle and the first torque allocation ratio of each      │
│ driven wheel, where when the corresponding driven wheel    │
│ is driven according to the first allocation torque of each │
│ driven wheel and a steering wheel rotation angle of the    │
│ vehicle is a set angle, a mapping curve between a turning   │── S120
│ radius and a lateral acceleration of the vehicle is a      │
│ first curve, and an integral of the first curve over a set │
│ lateral acceleration interval is a first area, where if    │
│ the torque vector control function is inactivated and when │
│ the steering wheel rotation angle of the vehicle turns     │
│ according to the set angle, a mapping curve between a      │
│ turning radius and a lateral acceleration of the vehicle   │
│ is a second curve, an integral of the second curve over    │
│ the set lateral acceleration interval is a second area,    │
│ and the first area is less than the second area            │
└──────────────────────────────────────────────────────────┘
```

FIG. 1

## Description

## CROSS-REFERENCE TO RELATED APPLICATIONS

The present disclosure claims priority to Chinese Patent Application No. 202211678720.4, filed on December 26, 2022. The entire content of the above-referenced applications is incorporated herein by reference.

## FIELD

The present disclosure relates to the field of vehicle control technologies, and in particular, to a power control method for a vehicle and device, a medium, a vehicle controller, and a vehicle.

## BACKGROUND

With development of the vehicle industry and economy, vehicles have been increasingly widely used. Generally, during driving, it is difficult for a vehicle to turn at a relatively high speed and with a relatively small turning radius, or when a speed is relatively high, a vehicle cannot turn steadily because it becomes prone to skidding. That is, a maximum speed limit for steady turning is relatively small. Especially when the vehicle is excessively loaded, the road condition, or the weather is relatively poor, wheels of the vehicle are highly likely to experience severe skidding, which affects stability and safety of the vehicle during driving.

## SUMMARY

The present disclosure is intended to resolve at least one of the technical problems in the related art to some extent.

Therefore, a first objective of the present disclosure is to provide a power control method for a vehicle, to prolong a lateral acceleration interval at which a vehicle steadily turns without skidding, and increase a maximum speed limit at which the vehicle steadily turns.

A second objective of the present disclosure is to provide a computer-readable storage medium.

A third objective of the present disclosure is to provide a vehicle controller.

A fourth objective of the present disclosure is to provide a vehicle power control device.

A fifth objective of the present disclosure is to provide a vehicle.

To achieve the foregoing objectives, an embodiment of a first aspect of the present disclosure provides a power control method for a vehicle, including: determining, according to a dynamic load of each driven wheel of a vehicle, a first torque allocation ratio of each driven wheel if a torque vector control function is activated; and determining a first allocation torque of the corresponding driven wheel according to a vehicle required torque of the vehicle and the first torque allocation ratio of each driven wheel. When the corresponding driven wheel is driven according to the first allocation torque of each driven wheel and a steering wheel rotation angle of the vehicle is a set angle, a mapping curve between a turning radius and a lateral acceleration of the vehicle is a first curve, and an integral of the first curve over a set lateral acceleration interval is a first area. If the torque vector control function is not activated and when the steering wheel rotation angle of the vehicle turns according to the set angle, a mapping curve between a turning radius and a lateral acceleration of the vehicle is a second curve, an integral of the second curve over the set lateral acceleration interval is a second area, and the first area is less than the second area.

According to an embodiment of the present disclosure, at a same turning radius, a lateral acceleration corresponding to the first curve is greater than a lateral acceleration corresponding to the second curve.

According to an embodiment of the present disclosure, at a same speed, a turning radius corresponding to the first curve is less than a turning radius corresponding to the second curve.

According to an embodiment of the present disclosure, a length of the set lateral acceleration interval accounts for 30% to 40% of a lower limit value of the set lateral acceleration interval.

According to an embodiment of the present disclosure, determining, according to the dynamic load of each driven wheel of the vehicle, the first torque allocation ratio of each driven wheel includes: determining a basic torque allocation ratio of each driven wheel according to the dynamic load of each driven wheel; determining, according to wheel speed difference information of the vehicle, a wheel speed correction amount of a torque allocation ratio of each driven wheel, and determining, according to lateral dynamic information of the vehicle, a steering correction amount of the torque allocation ratio of each driven wheel; and correcting the basic torque allocation ratio according to the wheel speed correction amount and/or the steering correction amount, to obtain the first torque allocation ratio of each driven wheel.

According to an embodiment of the present disclosure, determining the basic torque allocation ratio of the corresponding driven wheel according to the dynamic load of each driven wheel includes: determining a ratio of the dynamic load of each driven wheel to total dynamic loads as the basic torque allocation ratio of the corresponding driven wheel. A sum of dynamic loads of the driven wheels is equal to the total dynamic loads.

According to an embodiment of the present disclosure, the dynamic load of each driven wheel is determined according to a total mass of the vehicle and a longitudinal acceleration and the lateral acceleration of the vehicle.

According to an embodiment of the present disclosure, the driven wheels include a left front wheel, a right front wheel, a left rear wheel, and a right rear wheel, an axis at which the left front wheel and the right front wheel are located is a front axis of the vehicle, and an axis at which the left rear wheel and the right rear wheel are located is a rear axis of the vehicle. The dynamic load of each driven wheel is calculated according to the following formula:

$$F_{z11,D} = \frac{mgb}{2L} - \frac{ma_x h_g}{2L} - \frac{ma_y h_g}{bL_f + aL_r} b \ ,$$

$$F_{z12,D} = \frac{mgb}{2L} - \frac{ma_x h_g}{2L} + \frac{ma_y h_g}{bL_f + aL_r} b \ ,$$

$$F_{z21,D} = \frac{mga}{2L} + \frac{ma_x h_g}{2L} - \frac{ma_y h_g}{bL_f + aL_r} a \ ,$$

and

$$F_{z22,D} = \frac{mga}{2L} + \frac{ma_x h_g}{2L} + \frac{ma_y h_g}{bL_f + aL_r} a \ .$$

$F_{Z11,D}$, $F_{Z12,D}$, $F_{Z21,D}$, and $F_{Z22,D}$ are the dynamic load of the left front wheel, the dynamic load of the right front wheel, the dynamic load of the left rear wheel, and the dynamic load of the right rear wheel respectively. m is the total mass of the vehicle. a and b are a distance between the front axis and a centroid point and a distance between the rear axis and the centroid point respectively. $h_g$ is a height of the centroid point of the vehicle. L is a track width of the vehicle. Lf is a wheel base between the left front wheel and the right front wheel. $L_r$ is a wheel base between the left rear wheel and the right rear wheel. g is a gravitational acceleration. $a_x$ is the longitudinal acceleration of the vehicle. $a_y$ is the lateral acceleration of the vehicle.

According to an embodiment of the present disclosure, correcting the basic torque allocation ratio according to the wheel speed correction amount and the steering correction amount includes: determining a first intermediate torque allocation ratio according to the wheel speed correction amount and the basic torque allocation ratio, and determining the first torque allocation ratio according to the steering correction amount and the first intermediate torque allocation ratio; or determining a second intermediate torque allocation ratio according to the steering correction amount and the basic torque allocation ratio, and determining the first torque allocation ratio according to the wheel speed correction amount and the second intermediate torque allocation ratio.

According to an embodiment of the present disclosure, correcting the basic torque allocation ratio according to the wheel speed correction amount or the steering correction amount includes: if a steering correction sub function of the vehicle is activated, determining the first torque allocation ratio according to the steering correction amount and the basic torque allocation ratio; if a steering correction sub function of the vehicle is not activated and a wheel speed correction sub function of the vehicle is activated, determining the first torque allocation ratio according to the wheel speed correction amount and the basic torque allocation ratio; or if a steering correction sub function of the vehicle is not activated and a wheel speed correction sub function of the vehicle is not activated, using the basic torque allocation ratio as the first torque allocation ratio.

According to an embodiment of the present disclosure, the driven wheels include a left front wheel, a right front wheel, a left rear wheel, and a right rear wheel, an axis at which the left front wheel and the right front wheel are located is a front axis of the vehicle, and an axis at which the left rear wheel and the right rear wheel are located is a rear axis of the vehicle. The wheel speed difference information includes a first wheel speed difference between the left front wheel and the right front wheel, a second wheel speed difference between the left rear wheel and the right rear wheel, and an axis speed difference between the front axis and the rear axis. The method further includes: when the first wheel speed difference is greater than a first preset speed threshold, determining that the wheel speed correction sub function of the vehicle is activated; when the second wheel speed difference is greater than a second preset speed threshold, determining that the wheel speed correction sub function of the vehicle is activated; or when the axis speed difference is greater than a third preset speed threshold, determining that the wheel speed correction sub function of the vehicle is activated.

According to an embodiment of the present disclosure, the lateral dynamic information is determined according to a relationship between an actual yaw rate and an ideal yaw rate of the vehicle. The method further includes: determining that the steering correction sub function of the vehicle is activated when the actual yaw rate is greater than the ideal yaw rate and a difference between the actual yaw rate and the ideal yaw rate is greater than a fourth preset speed threshold; or determining that the steering correction sub function of the vehicle is activated when the actual yaw rate is less than the ideal yaw rate and a difference between the ideal yaw rate and the actual yaw rate is greater than a fifth preset speed threshold.

According to an embodiment of the present disclosure, the driven wheels include a left front wheel, a right front wheel, a left rear wheel, and a right rear wheel, an axis at which the left front wheel and the right front wheel are located is a front axis of the vehicle, and an axis at which the left rear wheel and the right rear wheel are located is a rear axis of the vehicle. The wheel speed difference information includes a first wheel speed difference between the left front wheel and the right front wheel, a second wheel speed difference between the left rear wheel and the right rear wheel, and an axis speed difference between the front axis and the rear axis. Determining, according to wheel speed difference information, a wheel speed correction amount of a torque allocation ratio of each driven wheel includes: determining a first correction amount of the left front wheel and the right front wheel according to the first wheel speed difference, determining a second correction amount of the left rear wheel and the right rear wheel according to the second wheel speed difference, and determining a third correction amount of the front axis and the rear axis according to the axis speed difference; and determining a wheel speed correction amount of the left front wheel and the right front wheel according to the first correction amount and the third correction amount, and determining a wheel speed correction amount of the left rear wheel and the right rear wheel according to the second correction amount and the third correction amount.

According to an embodiment of the present disclosure, determining the first correction amount of the left front wheel and the right front wheel according to the first wheel speed difference includes: determining the first correction amount of the left front wheel and the right front wheel according to the first wheel speed difference and a change rate of the first wheel speed difference when the first wheel speed difference is greater than the first preset speed threshold; and/or determining the second correction amount of the left rear wheel and the right rear wheel according to the second wheel speed difference includes: determining the second correction amount of the left rear wheel and the right rear wheel according to the second wheel speed difference and a change rate of the second wheel speed difference when the second wheel speed difference is greater than the second preset speed threshold; and/or determining the third correction amount of the front axis and the rear axis according to the axis speed difference includes: determining the third correction amount of the front axis and the rear axis according to the axis speed difference and a change rate of the axis speed difference when the axis speed difference is greater than the third preset speed threshold.

According to an embodiment of the present disclosure, correcting the basic torque allocation ratio according to the wheel speed correction amount includes: subtracting the first correction amount from a basic torque allocation ratio corresponding to either of the left front wheel and the right front wheel whose wheel speed is larger, and adding the first correction amount to a basic torque allocation ratio corresponding to either of the left front wheel and the right front wheel whose wheel speed is smaller; and/or subtracting the second correction amount from a basic torque allocation ratio corresponding to either of the left rear wheel and the right rear wheel whose wheel speed is larger, and adding the second correction amount to a basic torque allocation ratio corresponding to either of the left rear wheel and the right rear wheel whose wheel speed is smaller; and/or respectively subtracting a half of the third correction amount from a basic torque allocation ratio of either of the two driven wheels corresponding to either of the front axis and the rear axis whose axis speed is larger, and respectively adding the half of the third correction amount to a basic torque allocation ratio of either of the two driven wheels corresponding to either of the front axis and the rear axis whose axis speed is smaller.

According to an embodiment of the present disclosure, it is determined that the first correction amount is zero when the first wheel speed difference is less than or equal to the first preset speed threshold; and/or it is determined that the second correction amount is zero when the second wheel speed difference is less than or equal to the second preset speed threshold; and/or it is determined that the third correction amount is zero when the axis speed difference is less than or equal to the third preset speed threshold.

According to an embodiment of the present disclosure, the lateral dynamic information is determined according to a relationship between an actual yaw rate and an ideal yaw rate of the vehicle.

According to an embodiment of the present disclosure, the driven wheels include the left front wheel, the right front wheel, the left rear wheel, and the right rear wheel, the axis at which the left front wheel and the right front wheel are located is the front axis of the vehicle, and the axis at which the left rear wheel and the right rear wheel are located is the rear axis of the vehicle. Determining, according to lateral dynamic information, a steering correction amount of the torque allocation ratio of each driven wheel includes: determining, when the actual yaw rate is greater than the ideal yaw rate and a difference between the actual yaw rate and the ideal yaw rate is greater than a fourth preset speed threshold, a front axis oversteering correction amount, a rear axis oversteering correction amount, and a front and rear axis oversteering correction amount according to the difference between the actual yaw rate and the ideal yaw rate; or determining, when the actual yaw rate is less than the ideal yaw rate and a difference between the ideal yaw rate and the actual yaw rate is greater than a fifth preset speed threshold, a front axis understeering correction amount, a rear axis understeering correction amount, and a front and rear axis understeering correction amount according to the difference between the ideal yaw rate and the actual yaw rate.

According to an embodiment of the present disclosure, correcting the basic torque allocation ratio according to the steering correction amount when the actual yaw rate is greater than the ideal yaw rate and the difference between the actual yaw rate and the ideal yaw rate is greater than the fourth preset speed threshold includes: adding the front axis oversteering correction amount to a basic torque allocation ratio of a steered wheel at an inner side of either of the left front wheel and the right front wheel, and subtracting the front axis oversteering correction amount from a basic torque allocation ratio of a steered wheel at an outer side of either of the left front wheel and the right front wheel; adding the rear axis oversteering correction amount to a basic torque allocation ratio of a steered wheel at an inner side of either of the left rear wheel and the right rear wheel, and subtracting the rear axis oversteering correction amount from a basic torque allocation ratio of a steered wheel at an outer side of either of the left rear wheel and the right rear wheel; and adding a half of the front and rear axis oversteering correction amount to the basic torque allocation ratio of the left front wheel and the right front wheel, and subtracting the half of the front and rear axis oversteering correction amount from the basic torque allocation ratio of the left rear wheel and the right rear wheel.

According to an embodiment of the present disclosure, correcting the basic torque allocation ratio according to the steering correction amount when the actual yaw rate is less than the ideal yaw rate and the difference between the ideal yaw rate and the actual yaw rate is greater than the fifth preset speed threshold includes: subtracting the front axis understeering correction amount from the basic torque allocation ratio of the steered wheel at the inner side of either of the left front wheel and the right front wheel, and adding the front axis understeering correction amount to the basic torque allocation ratio of the steered wheel at the outer side of either of the left front wheel and the right front wheel; subtracting the rear axis understeering correction amount from the basic torque allocation ratio of the steered wheel at the inner side of either of the left rear wheel and the right rear wheel, and adding the rear axis understeering correction amount to the basic torque allocation ratio of the steered wheel at the outer side of either of the left rear wheel and the right rear wheel; and subtracting the half of the front and rear axis understeering correction amount from the basic torque allocation ratio of the left front wheel and the right front wheel, and adding the half of the front and rear axis understeering correction amount to the basic torque allocation ratio of the left rear wheel and the right rear wheel.

According to an embodiment of the present disclosure, when the actual yaw rate is greater than the ideal yaw rate and the difference between the actual yaw rate and the ideal yaw rate is less than or equal to the fourth preset speed threshold, it is determined that the front axis oversteering correction amount, the rear axis oversteering correction amount, and the front and rear axis oversteering correction amount are respectively zero; or when the actual yaw rate is less than the ideal yaw rate and the difference between the ideal yaw rate and the actual yaw rate is less than or equal to the fifth preset speed threshold, it is determined that the front axis understeering correction amount, the rear axis understeering correction amount, and the front and rear axis understeering correction amount of the vehicle are respectively zero.

According to an embodiment of the present disclosure, the driven wheels include the left front wheel, the right front wheel, the left rear wheel, and the right rear wheel, the axis at which the left front wheel and the right front wheel are located is the front axis of the vehicle, and the axis at which the left rear wheel and the right rear wheel are located is the rear axis of the vehicle. The method further includes: determining that the torque vector control function of the vehicle is activated when an accelerator pedal depth change rate obtained by pedaling an accelerator pedal of the vehicle is greater than a first preset accelerator pedal depth change rate threshold, or when an accelerator pedal depth change rate obtained by releasing the accelerator pedal is less than a second preset accelerator pedal depth change rate threshold; determining that the torque vector control function of the vehicle is activated when a steering wheel rotation angle change rate of the vehicle is greater than a preset steering wheel rotation angle change rate threshold; determining that the torque vector control function of the vehicle is activated when the lateral acceleration is greater than a preset lateral acceleration threshold; determining that the torque vector control function of the vehicle is activated when a wheel speed difference between the left front wheel and the right front wheel is greater than the first preset speed threshold; determining that the torque vector control function of the vehicle is activated when a wheel speed difference between the left rear wheel and the right rear wheel is greater than the second preset speed threshold; determining that the torque vector control function of the vehicle is activated when the axis speed difference between the front axis and the rear axis is greater than the third preset speed threshold; determining that the torque vector control function of the vehicle is activated when the difference between the actual yaw rate and the ideal yaw rate of the vehicle is greater than the fourth preset speed threshold; or determining that the torque vector control function of the vehicle is activated when the difference between the ideal yaw rate and the actual yaw rate of the vehicle is greater than the fifth preset speed threshold.

According to an embodiment of the present disclosure, the first preset accelerator pedal depth change rate threshold and the second preset accelerator pedal depth change rate threshold are determined according to the lateral acceleration of the vehicle, and the preset steering wheel rotation angle change rate threshold, the preset lateral acceleration threshold, the first preset speed threshold, the second preset speed threshold, the third preset speed threshold, the fourth preset speed threshold, and the fifth preset speed threshold are determined according to a current speed of the vehicle.

According to an embodiment of the present disclosure, the driven wheels include the left front wheel, the right front wheel, the left rear wheel, and the right rear wheel, the axis at which the left front wheel and the right front wheel are located is the front axis of the vehicle, and the axis at which the left rear wheel and the right rear wheel are located is the rear axis of the vehicle. The method further includes: determining a torque allocation ratio of the front axis and a torque allocation ratio of the rear axis according to the vehicle required torque of the vehicle when the torque vector control function of the vehicle is not activated, evenly allocating the torque allocation ratio corresponding to the front axis to the left front wheel and the right front wheel, and evenly allocating the torque allocation ratio corresponding to the rear axis to the left rear wheel and the right rear wheel, to determine a second torque allocation ratio of the corresponding driven wheel; and determining a second allocation torque of the corresponding driven wheel according to the vehicle required torque of the vehicle and the second torque allocation ratio of each driven wheel.

According to an embodiment of the present disclosure, the driven wheels include the left front wheel, the right front wheel, the left rear wheel, and the right rear wheel, the axis at which the left front wheel and the right front wheel are located is the front axis of the vehicle, and the axis at which the left rear wheel and the right rear wheel are located is the rear axis of the vehicle. The method further includes: when the accelerator pedal depth change rate obtained by pedaling the accelerator pedal of the vehicle is less than or equal to a first preset accelerator pedal depth change rate threshold, or when the accelerator pedal depth change rate obtained by releasing the accelerator pedal is greater than or equal to a second preset accelerator pedal depth change rate threshold; when the steering wheel rotation angle change rate of the vehicle is less than or equal to the preset steering wheel rotation angle change rate threshold; when the lateral acceleration is less than or equal to the preset lateral acceleration threshold; when the wheel speed difference between the left front wheel and the right front wheel is less than or equal to the first preset speed threshold; when the wheel speed difference between the left rear wheel and the right rear wheel is less than or equal to the second preset speed threshold; when the axis speed difference between the front axis and the rear axis is less than or equal to the third preset speed threshold; when the difference between the actual yaw rate and the ideal yaw rate of the vehicle is less than or equal to the fourth preset speed threshold; and when the difference between the ideal yaw rate and the actual yaw rate of the vehicle is less than or equal to the fifth preset speed threshold, determining that the torque vector control function of the vehicle is not activated.

According to the power control method for a vehicle in this embodiment of the present disclosure, when a torque vector control function of a vehicle is activated, a first torque allocation ratio of each driven wheel is determined according to a dynamic load of each driven wheel of the vehicle. A first allocation torque of the corresponding driven wheel is determined according to a vehicle required torque of the vehicle and the first torque allocation ratio of each driven wheel. When the corresponding driven wheel is driven according to the first allocation torque of each driven wheel and a steering wheel rotation angle of the vehicle is a set angle, an area that is obtained when a mapping curve between the turning radius and the lateral acceleration of the vehicle is a first curve is less than an area that is obtained when a mapping curve between the turning radius and the lateral acceleration of the vehicle is a second curve when the torque vector control function is not activated. In this way, when the torque vector control function of the vehicle is activated, a lateral acceleration interval at which the vehicle steadily turns without skidding is prolonged, and a maximum speed limit for steady turning is increased. A speed is the highest under the same road condition and on the same curve, and the turning radius is the smallest at the same speed. When the vehicle turns at a high speed, stability of the vehicle is ensured, thereby protecting property and personal safety of a user.

To implement the foregoing embodiments, a second aspect of the present disclosure provides a computer-readable storage medium. The computer-readable storage medium stores a vehicle power control program. When the vehicle power control program is executed by a processor, the power control method for a vehicle according to an embodiment of the first aspect in the present disclosure is implemented.

To implement the foregoing embodiments, a third aspect of the present disclosure provides a vehicle controller. The vehicle controller includes a memory, a processor, and a vehicle power control program stored in the memory and executable on the processor. When the vehicle power control program is executed by the processor, the power control method for a vehicle according to an embodiment of the first aspect in the present disclosure is implemented.

To implement the foregoing embodiments, an embodiment of a fourth aspect of the present disclosure provides a vehicle power control device, including: a first determining module, configured to determine, according to a dynamic load of each driven wheel of a vehicle, a first torque allocation ratio of each driven wheel when a torque vector control function is activated; and a second determining module, configured to determine a first allocation torque of the corresponding driven wheel according to a vehicle required torque of the vehicle and the first torque allocation ratio of each driven wheel. When the corresponding driven wheel is driven according to the first allocation torque of each driven wheel and a steering wheel rotation angle of the vehicle is a set angle, a mapping curve between a turning radius and a lateral acceleration of the vehicle is a first curve, and an integral of the first curve over a set lateral acceleration interval is a first area. If the torque vector control function is not activated and when the steering wheel rotation angle of the vehicle turns according to the set angle, a mapping curve between a turning radius and a lateral acceleration of the vehicle is a second curve, an integral of the second curve over the set lateral acceleration interval is a second area, and the first area is less than the second area.

To implement the foregoing embodiments, an embodiment of a fifth aspect of the present disclosure provides a vehicle. The vehicle includes the vehicle controller according to the embodiment of the third aspect in the present disclosure.

Other aspects and advantages of the present disclosure will be given in the following description, some of which will become apparent from the following description or may be learned from practices of the present disclosure.

## BRIEF DESCRIPTION OF THE DRAWINGS

FIG. 1 is a schematic flowchart of a power control method for a vehicle according to an embodiment of the present disclosure;

FIG. 2 is a diagram of mapping curves between a lateral acceleration and a turning radius according to a specific embodiment of the present disclosure;

FIG. 3 is a schematic flowchart of a power control method for a vehicle according to a first specific embodiment of the present disclosure;

FIG. 4 is a flowchart of a power control method for a vehicle according to a second specific embodiment of the present disclosure;

FIG. 5 is a flowchart of a power control method for a vehicle according to a third specific embodiment of the present disclosure;

FIG. 6 is a schematic diagram of a structure of a computer-readable storage medium according to an embodiment of the present disclosure;

FIG. 7 is a schematic diagram of a structure of a vehicle controller according to an embodiment of the present disclosure;

FIG. 8 is a schematic diagram of a structure of a vehicle power control device according to an embodiment of the present disclosure; and

FIG. 9 is a schematic diagram of a structure of a vehicle according to an embodiment of the present disclosure.

## DETAILED DESCRIPTION

Embodiments of the present disclosure are described in detail below. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the present disclosure and cannot be construed as a limitation to the present disclosure.

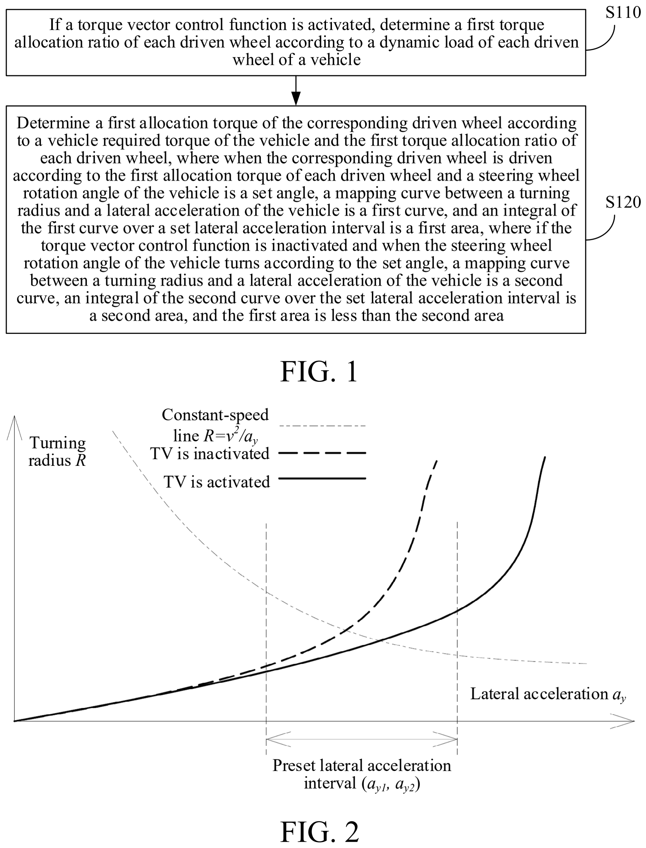

A power control method for a vehicle and device, a medium, a vehicle controller, and a vehicle in the embodiments of the present disclosure are described below with reference to FIG. 1 to FIG. 9.

FIG. 1 is a flowchart of a power control method for a vehicle according to an embodiment of the present disclosure.

As shown in FIG. 1, the power control method for a vehicle may include the following steps.

S110: If a torque vector control function is activated, a first torque allocation ratio of each driven wheel is determined according to a dynamic load of each driven wheel of a vehicle.

S120: A first allocation torque of a corresponding driven wheel is determined according to a vehicle required torque of the vehicle and the first torque allocation ratio of each driven wheel.

It should be noted that, as a central control unit of the vehicle, a vehicle controller is a core of an entire control system. In a driving process of the vehicle, the vehicle controller may calculate, according to information such as an operation intention of a driver, such as an accelerator pedal position, a gear position, and a braking pedal position, parameters such as a driving force or a braking force required for driving the vehicle, to coordinate movement of various power components, thereby ensuring normal driving of the vehicle.

In some embodiments of the present disclosure, in the driving process of the vehicle, the vehicle controller may obtain the vehicle required torque by collecting a depth of an accelerator pedal, and obtaining wheel speed difference information and lateral dynamic information of each driven wheel by using a sensor. The wheel speed difference information represents a difference between rotation speeds of the driven wheels, and the lateral dynamic information represents information such as longitudinal and lateral movement directions of the vehicle and a generated yaw rate when the vehicle turns.

In some embodiments of the present disclosure, when the torque vector control function of the vehicle is activated, an allocation torque corresponding to each driven wheel is determined as the first allocation torque according to the vehicle required torque and the first torque allocation ratio. When the corresponding driven wheel is driven according to the first allocation torque of each driven wheel and a steering wheel rotation angle of the vehicle is a set angle, a mapping curve between a turning radius and a lateral acceleration of the vehicle is a first curve, and an integral of the first curve over a set lateral acceleration interval is a first area. If the torque vector control function is not activated and when the steering wheel rotation angle of the vehicle turns according to the set angle, a mapping curve between a turning radius and a lateral acceleration of the vehicle is a second curve, an integral of the second curve over the set lateral acceleration interval is a second area. The first area is less than the second area.

FIG. 2 is a diagram of mapping curves between a lateral acceleration and a turning radius during turning of a vehicle when a torque vector (TV, Torque Vector) control function of the vehicle is activated and not activated. As shown in FIG. 2, under a same vehicle condition, a steering wheel rotation angle of the vehicle is fixed at a set angle, the vehicle is controlled to start, and slowly and evenly accelerate, and a lateral acceleration $a_y$ and a turning radius R at different moments when the TV is activated and when the TV is not activated are separately recorded, to obtain mapping curves, namely, a first curve and a second curve, between the turning radius and the lateral acceleration shown in FIG. 2.

It should be noted that, during turning of the vehicle, as the lateral acceleration increases, dynamic loads of wheels at an inner side of a curve decreases, and dynamic loads of wheels at an outer side of the curve increase. Grip capabilities of wheels are equal to a product of dynamic loads of the wheels and a road surface attachment coefficient. Therefore, the grip capabilities of the wheels at the inner side of the curve decrease, and the grip capabilities of the wheels at the outer side of the curve increase. As shown in FIG. 2, when the lateral acceleration $a_y$ is less than $a_y l$, the corresponding second curve that is obtained when the TV is not activated is in a linear-like region. At this stage, although the grip capabilities of the driven wheels at the inner side of the curve decrease due to the increase of the lateral acceleration, the grip capabilities are still greater than a driving force, and no skidding occurs. Therefore, a change amount of the turning radius is very small under a constraint of the steering wheel rotation angle, or a relationship between the lateral acceleration and the turning radius approaches a linear relationship. When the lateral acceleration ranges from $a_y 1$ to $a_y 2$, the corresponding second curve when the TV is not activated is in a non-linear region. At this stage, the grip capabilities of the driven wheels at the inner side of the curve are reduced to be less than the driving force, that is, skidding occurs. Therefore, the turning radius no longer continues to increase with the increase of the lateral acceleration due to restriction of the steering wheel rotation angle, but greatly and rapidly increases. When the lateral acceleration is greater than $a_y 2$, the corresponding second curve when the TV is not activated is in an uncontrolled region. At this stage, the vehicle cannot normally turn.

Relatively, it can be understood from FIG. 2, a first area that corresponds to an integral of a corresponding first curve over a preset acceleration interval and that is obtained when the torque vector control function of the vehicle is activated is less than a second area that corresponds to an integral of a corresponding second curve over the preset acceleration interval and that is obtained when the vehicle of the torque vector control function is not activated. A person skilled in the art may understand that, when the steering wheel rotation angle is fixed, theoretically, the lateral acceleration is positively correlated to the turning radius, which indicates that, over a set lateral acceleration interval, the second curve first enters the non-linear region in which the turning radius greatly and rapidly increases. That is, it indicates that the corresponding first curve that is obtained when the TV is activated has a linear-like region whose length is longer. That is, when the TV is activated, a lateral acceleration interval in which turning is steady and no skidding occurs is prolonged. In this embodiment, when the TV is activated, a first torque allocation ratio of each driven wheel is determined according to a dynamic load of each driven wheel. Actually, the driving force is allocated according to an attachment capability of each driven wheel. This not only prevents the wheels at the inner side from skidding too early, but also avoids the excess grip of the wheels at the outer side, thereby greatly prolonging a length of the linear-like region, and improving a maximum speed for steady turning. In other words, when the torque vector control function of the vehicle is activated, a speed is the highest under a same road condition and in a same curve, and the turning radius is the smallest at a same speed, to ensure stability of the vehicle when the vehicle turns at a high speed, thereby ensuring property and personal safety of a user.

In some embodiments of the present disclosure, a set angle of the steering wheel rotation angle is less than 90°, and an actual value thereof may be selected according to experience of a person skilled in the art or an actual requirement. A range of the set lateral acceleration interval may also be selected according to the experience of the person skilled in the art or an actual requirement. This is not specifically limited in the present disclosure.

In some embodiments of the present disclosure, at a same turning radius, a lateral acceleration corresponding to the first curve is greater than a lateral acceleration corresponding to the second curve.

Specifically, as shown in FIG. 2, when the turning radius is the same, the corresponding lateral acceleration that is obtained when the torque vector control function of the vehicle is activated (the TV is activated) is greater than the lateral acceleration that is obtained when the torque vector control function of the vehicle is not activated (the TV is not activated). According to a relationship $a_y = v^2/R$ among the turning radius R, the speed v, and the lateral acceleration $a_y$, when the turning radius is the same, the lateral acceleration is higher when the TV is activated, and the corresponding speed is higher, that is, the speed is higher in a same curve.

In some embodiments of the present disclosure, at a same speed, a turning radius corresponding to the first curve is less than a turning radius corresponding to the second curve.

Specifically, according to the relationship $R = v^2/a_y$ among the turning radius R, the speed v, and the lateral acceleration $a_y$, as shown in FIG. 2, when the speed is fixed, a constant-speed line with an inverse proportional relationship between the turning radius R and the lateral acceleration $a_y$ may be obtained. In addition, a turning radius corresponding to an intersection point between the constant-speed line and the first curve is less than a turning radius corresponding to an intersection point between the constant-speed line and the second curve. To be specific, a corresponding turning radius R that is obtained when the torque vector control function of the vehicle is activated (the TV is activated) is less than a turning radius R that is obtained when the torque vector control function of the vehicle is not activated (the TV is not activated). To be specific, at a same speed, the turning radius that is obtained after the TV is activated is smaller, thereby further improving safety of the vehicle during turning.

In some embodiments of the present disclosure, a length of the set lateral acceleration interval accounts for 30% to 40% of a lower limit value of the set lateral acceleration interval.

It should be noted that, the set lateral acceleration interval may correspond to a non-linear region of the second curve, where an upper limit value $a_y2$ and a lower limit value $a_y1$ of the non-linear region of the second curve are related to calibration conditions of different vehicles and road surface attachment coefficients that are obtained when the first curve and the second curve are recorded, and may be selected according to the experience of the person skilled in the art or the actual requirement. This is not specifically limited in the present disclosure.

Further, it may be understood that, the lower limit $a_y1$ of the set lateral acceleration interval may correspond to a length of the linear-like region of the second curve, and the upper limit $a_y2$ of the set lateral acceleration interval may correspond to a length of the linear-like region of the first curve. An interval length of the set lateral acceleration interval ($a_y1$, $a_y2$) may be 30% to 40% of $a_y1$. To be specific, the length of the linear-like region in which turning is steady and that is obtained when the TV is not activated may be prolonged by 30% to 40% when the TV is activated.

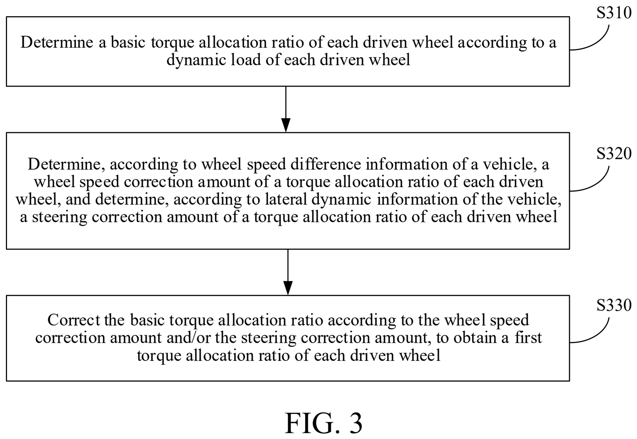

FIG. 3 is a schematic flowchart of a power control method for a vehicle according to a specific embodiment of the present disclosure.

As shown in FIG. 3, that a first torque allocation ratio of each driven wheel is determined according to a dynamic load of each driven wheel of a vehicle may include the following steps.

S310: A basic torque allocation ratio of each driven wheel is determined according to the dynamic load of each driven wheel.

Optionally, after the dynamic load of each driven wheel of the vehicle is obtained, a first ratio coefficient of the dynamic load corresponding to each driven wheel to total dynamic loads is determined, and the first ratio coefficient is used as the basic torque allocation ratio. For example, the total dynamic loads of the vehicle are H, the dynamic load corresponding to each driven wheel is (h1, h2, ..., and hi), and the corresponding first ratio coefficient is (h1/H, h2/H, ..., and hi/H), where

$$H = \sum_{i=1}^{n} hi$$

. n is a quantity of driven wheels of the vehicle, and the first ratio coefficient is used as the basic torque allocation ratio.

S320: A wheel speed correction amount of a torque allocation ratio of each driven wheel is determined according to wheel speed difference information of the vehicle, and a steering correction amount of the torque allocation ratio of each driven wheel is determined according to lateral dynamic information of the vehicle.

S330: The basic torque allocation ratio is corrected according to the wheel speed correction amount and/or the steering correction amount, to obtain the first torque allocation ratio of each driven wheel.

In an example, after the first torque allocation ratio of each driven wheel is determined, a vehicle required torque is allocated to each driven wheel according to an allocation torque ratio of each driven wheel, so that a total torque requirement of the vehicle keeps unchanged, to ensure dynamism and stability of the vehicle.

It may be understood that, after a driving torque is allocated according to the dynamic load of each driven wheel of the vehicle, torques of wheels at an inner side decrease and torques of wheels at an outer side increase. In other words, a rotation speed difference between the wheels at the inner side and the wheels at the outer side has a tendency to increase. If the rotation speed difference is excessively large, longitudinal skidding easily occurs when a skidding ratio of the wheels at the outer side is excessively high, and tire wear is exacerbated. In this embodiment, after the basic torque allocation ratio of each driven wheel is determined, the basic torque allocation ratio is corrected according to the wheel speed correction amount, so that the tire wear can be reduced. Next, after the driving torque is allocated according to the dynamic load, the torques of the wheels at the inner side are reduced and the torques of the wheels at the outer side are increased. That is, the vehicle generates an additional yaw moment. Under the additional action of the yaw moment, a turning feature of the vehicle may be understeering or oversteering, which affects stability of the vehicle. After the basic torque allocation ratio of each driven wheel is determined, the basic torque allocation ratio is corrected according to the steering correction amount, to ensure steering stability of the vehicle.

In some embodiments of the present disclosure, that the basic torque allocation ratio of the corresponding driven wheel is determined according to the dynamic load of each driven wheel may further include the following steps. A ratio of the dynamic load of each driven wheel to total dynamic loads is determined as the basic torque allocation ratio of the corresponding driven wheel. A sum of dynamic loads of the driven wheels is equal to the total dynamic loads.

Specifically, the dynamic load of each driven wheel is separately obtained, the dynamic load of each driven wheel is added to obtain the total dynamic loads of the vehicle, and the basic torque allocation ratio is further obtained according to the ratio of the dynamic load of each driven wheel to the total dynamic loads.

For example, the dynamic load of the driven wheel may be determined by detecting a deformation measurement value of a tire, the dynamic load of the driven wheel may be determined by obtaining a pressure measurement value of an internal pressure of each tire, or the dynamic load of the driven wheel may be determined by using a model and by obtaining a driving power signal of each driven wheel and an acceleration value of the driven wheel.

In another example, filtering may be further performed according to the driving power signal through a driving acceleration obtained by using a vehicle chassis sensor, to exclude resistance interference, and then directly obtain the total dynamic loads of the vehicle with reference to a dynamic model.

In some embodiments of the present disclosure, the dynamic load of each driven wheel is determined according to a total mass of the vehicle and a longitudinal acceleration and the lateral acceleration of the vehicle.

For example, the dynamic load of each driven wheel in the vehicle may be further determined by obtaining a distance between a front and rear axis and a centroid point, a height of the centroid point, a track width, a front and rear axis wheel base, a total mass, a longitudinal acceleration, and a lateral acceleration of the vehicle. Related parameters of the centroid point of the vehicle may be obtained through real-time measurement, or may be obtained by querying related parameters of the vehicle.

In some embodiments of the present disclosure, the driven wheels include a left front wheel, a right front wheel, a left rear wheel, and a right rear wheel, an axis at which the left front wheel and the right front wheel are located is a front axis of the vehicle, and an axis at which the left rear wheel and the right rear wheel are located is a rear axis of the vehicle. The dynamic load of each driven wheel is calculated according to the following formula:

$$F_{z11,D} = \frac{mgb}{2L} - \frac{ma_x h_g}{2L} - \frac{ma_y h_g}{bL_f + aL_r} b,$$

$$F_{z12,D} = \frac{mgb}{2L} - \frac{ma_x h_g}{2L} + \frac{ma_y h_g}{bL_f + aL_r} b,$$

$$F_{z21,D} = \frac{mga}{2L} + \frac{ma_x h_g}{2L} - \frac{ma_y h_g}{bL_f + aL_r} a,$$

and

$$F_{z22,D} = \frac{mga}{2L} + \frac{ma_x h_g}{2L} + \frac{ma_y h_g}{bL_f + aL_r} a$$

$F_{Z11,D}$, $F_{Z12,D}$, $F_{Z21,D}$, and $F_{Z22,D}$ are the dynamic load of the left front wheel, the dynamic load of the right front wheel, the dynamic load of the left rear wheel, and the dynamic load of the right rear wheel respectively, m is the total mass of the vehicle, a and b are a distance between the front axis and a centroid point and a distance between the rear axis and the centroid point respectively, $h_g$ is a height of the centroid point of the vehicle, L is a track width of the vehicle, $L_f$ is a wheel base between the left front wheel and the right front wheel, Lr is a wheel base between the left rear wheel and the right rear wheel, g is a gravitational acceleration, $a_x$ is the longitudinal acceleration of the vehicle, and $a_y$ is the lateral acceleration of the vehicle.

It should be noted that, in this embodiment, an example in which the driven wheels include the left front wheel, the right front wheel, a left rear wheel, and the right rear wheel is shown. For some large vehicles, the driven wheels include more wheels. This is not specifically limited in the present disclosure.

It may be understood that, the dynamic loads of the four driven wheels of the vehicle are shown in the foregoing formula. A relationship between a speed and a lateral acceleration is $a_y=v^2/R$. R is a turning radius. Assuming that the vehicle turns left, the left front wheel and the left rear wheel are the wheels at the inner side, and the right front wheel and the right rear wheel are the wheels at the outer side. In a process of recording the first curve and the second curve, because the vehicle is controlled to slowly and uniformly accelerate, the longitudinal acceleration $a_x$ can be ignored. Because a change amount of the turning radius is relatively small when no skidding occurs, and as the speed increases, the lateral acceleration also increases, the dynamic loads of the two left wheels decrease, and the dynamic loads of the two right wheels increase. Because grip capabilities of the wheels are equal to a product of the dynamic loads of the wheels and a road surface attachment coefficient, grip capabilities of the two left wheels decrease, and grip capabilities of the two right wheels increase. When a driving force generated by a driving torque acting on the wheels is greater than the grip capabilities of the wheels, lateral skidding occurs on the wheels.

When the torque vector control function of the vehicle is not activated, the driving torques of the left wheels and the driving torques of the right wheels are evenly allocated. Therefore, as the lateral acceleration increases, a case in which "the grip capabilities of the wheels at the inner side<the driving force obtained by even allocation<the grip capabilities of the wheels at the outer side" occurs. In other words, problems such as skidding of the wheels at the inner side and low attachment utilization of the wheels at the outer side occur. Therefore, when the lateral acceleration is relatively small, the second curve in FIG. 2 enters the non-linear region from the linear-like region, and the stability of the vehicle is reduced. However, when the torque vector control function of the vehicle is activated, the first torque allocation ratio of each driven wheel is determined according to the dynamic load of each driven wheel. That is, the driving force is allocated according to the attachment capability of each driven wheel, so that not only too early skidding of the wheels at the inner side can be avoided, but also the excess grip of the wheels at the outer side can be avoided, to greatly prolong the length of the linear-like region, thereby increasing a maximum speed during steady turning.

In some embodiments of the present disclosure, that the basic torque allocation ratio is corrected according to the wheel speed correction amount and the steering correction amount may further include: determining a first intermediate torque allocation ratio according to the wheel speed correction amount and the basic torque allocation ratio, and determining the first torque allocation ratio according to the steering correction amount and the first intermediate torque allocation ratio; or determining a second intermediate torque allocation ratio according to the steering correction amount and the basic torque allocation ratio, and determining the first torque allocation ratio according to the wheel speed correction amount and the second intermediate torque allocation ratio.

It may be understood that, based on the basic torque allocation ratio of each driven wheel of the vehicle, the torque allocation ratio of each driven wheel of the vehicle may be first adjusted according to the wheel speed correction amount, and then, torque allocation on each driven wheel of the vehicle is further adjusted according to the steering correction amount. Alternatively, based on the basic torque allocation ratio of the vehicle, the torque allocation on each driven wheel of the vehicle may be first adjusted according to the steering correction amount, and then, the torque allocation on each driven wheel of the vehicle is further adjusted according to the wheel speed correction amount. It should be noted that, adjustment that is performed according to the wheel speed correction amount and the steering correction amount on the torque allocation on the driven wheels may be performed in a sequence according to an actual requirement, or may be performed in a specified sequence. This is not specifically limited in the present disclosure.

In some embodiments of the present disclosure, when the basic torque allocation ratio is corrected according to the wheel speed correction amount or the steering correction amount, if a steering correction sub function of the vehicle is activated, the first torque allocation ratio is determined according to the steering correction amount and the basic torque allocation ratio. If a steering correction sub function of the vehicle is not activated and a wheel speed correction sub function of the vehicle is activated, the first torque allocation ratio is determined according to the wheel speed correction amount and the basic torque allocation ratio. If a steering correction sub function of the vehicle is not activated and a wheel speed correction sub function of the vehicle is not activated, the basic torque allocation ratio is used as the first torque allocation ratio. In other words, in different conditions, the first torque allocation ratio may be obtained after correction is performed based on the basic torque allocation ratio and according to only either of the wheel speed correction amount and the steering correction amount, or the basic torque allocation ratio may be directly used as the first torque allocation ratio. When the steering correction sub function is activated, the basic torque allocation ratio is corrected according to the steering correction amount, with a highest correction priority, that is, steering stability of the vehicle is ensured in priority. When the steering correction sub function of the vehicle is not activated and the wheel speed correction sub function of the vehicle is activated, the basic torque allocation ratio is corrected according to the wheel speed correction amount, that is, on the premise that the steering stability of the vehicle is ensured, wheel wear is further considered to be reduced. When neither the steering correction sub function nor the wheel speed correction sub function of the vehicle is activated, the basic torque allocation ratio does not need to be corrected, to prolong the length of the linear-like region of the first curve to the greatest extent, and increase the maximum speed during steady turning to the greatest extent

For example, activation conditions corresponding to the wheel speed correction sub function and the steering correction sub function may be set. When the activation conditions are satisfied, the corresponding correction sub function is activated. Alternatively, activation states of the wheel speed correction sub function and the steering correction sub function may be specified by an actual need.

It may be understood that, in some embodiments of the present disclosure, independent or parallel decision-making may be performed on correction of the basic torque allocation ratio according to the wheel speed correction sub function and the steering correction sub function, and a priority of the torque allocation correction of the steering correction sub function is higher than a priority of the torque allocation correction of the wheel speed correction sub function. Specifically, when both the wheel speed correction sub function and the steering correction sub function are in active states, or when the wheel speed correction sub function is an inactive state and the steering correction sub function is in an active state, based on the basic torque allocation, the torque allocation ratio of each driven wheel is adjusted according to the steering correction amount. When the wheel speed correction sub function is in an active state and the steering correction sub function is in an inactive state, based on the basic torque allocation, the torque allocation ratio of each driven wheel is adjusted according to the wheel speed correction amount. When both the wheel speed correction sub function and the steering correction sub function are in inactive states, the basic torque allocation ratio is used as a final torque requirement allocation ratio of each driven wheel.

In some embodiments of the present disclosure, the wheel speed difference information may include a first wheel speed difference between the left front wheel and the right front wheel of the vehicle, a second wheel speed difference between the left rear wheel and the right rear wheel of the vehicle, and an axis speed difference between the front axis and the rear axis. When the first wheel speed difference is greater than a first preset speed threshold, it is determined that the wheel speed correction sub function of the vehicle is activated; when the second wheel speed difference is greater than a second preset speed threshold, it is determined that the wheel speed correction sub function of the vehicle is activated; or when the axis speed difference is greater than a third preset speed threshold, it is determined that the wheel speed correction sub function of the vehicle is activated.

Specifically, whether the left front wheel and the right front wheel of the vehicle have a requirement of correction is determined according to the first wheel speed difference between the left front wheel and the right front wheel, whether the left rear wheel and the right rear wheel of the vehicle have a requirement of correction is determined according to the second wheel speed difference between the left rear wheel and the right rear wheel, and whether the front wheel and the rear wheel of the vehicle have a requirement of correction is determined according to the axis speed difference between the front axis and the rear axis of the vehicle. When the first wheel speed difference is greater than the first preset speed threshold, or the second wheel speed difference is greater than the second preset speed threshold, or the axis speed difference is greater than the third preset speed threshold, wheel speed correction needs to be performed on the driven wheels of the vehicle. That is, when any one of the conditions is satisfied, the wheel speed correction sub function of the vehicle is activated.

In some embodiments of the present disclosure, the lateral dynamic information may be determined according to a relationship between an actual yaw rate and an ideal yaw rate of the vehicle, and the method further includes: determining that the steering correction sub function of the vehicle is activated when the actual yaw rate is greater than the ideal yaw rate and a difference between the actual yaw rate and the ideal yaw rate is greater than a fourth preset speed threshold; or determining that the steering correction sub function of the vehicle is activated when the actual yaw rate is less than the ideal yaw rate and a difference between the ideal yaw rate and the actual yaw rate is greater than a fifth preset speed threshold.

It may be understood that, when the difference between the actual yaw rate and the ideal yaw rate of the vehicle is greater than a specific threshold, it indicates that the vehicle is understeered or oversteered, and a posture of the vehicle needs to be corrected. In this case, the steering correction sub function of the vehicle is activated.

In some embodiments of the present disclosure, whether the wheel speed correction sub function of the vehicle is activated is determined according to the wheel speed difference information of the vehicle, and whether the steering correction sub function of the vehicle is activated is determined according to the relationship between the actual yaw rate and the ideal yaw rate of the vehicle. The method is simple and reliable, and a response can be made in time when the vehicle needs to perform torque vector correction, to ensure driving safety and improve user experience.

In some embodiments of the present disclosure, the driven wheels include a left front wheel, a right front wheel, a left rear wheel, and a right rear wheel, an axis at which the left front wheel and the right front wheel are located is a front axis of the vehicle, and an axis at which the left rear wheel and the right rear wheel are located is a rear axis of the vehicle. The wheel speed difference information includes a first wheel speed difference between the left front wheel and the right front wheel, a second wheel speed difference between the left rear wheel and the right rear wheel, and an axis speed difference between the front axis and the rear axis.

It should be noted that, an axis speed of the front axis is an average value of a wheel speed of the left front wheel and a wheel speed of the right front wheel, and an axis speed of the rear axis is an average value of a wheel speed of the left rear wheel and a wheel speed of the right rear wheel. That the wheel speed correction amount of the torque allocation ratio of each driven wheel is determined according to the wheel speed difference information may include:

determining a first correction amount of the left front wheel and the right front wheel according to the first wheel speed difference, determining a second correction amount of the left rear wheel and the right rear wheel according to the second wheel speed difference, and determining a third correction amount of the front axis and the rear axis according to the axis speed difference.

In some embodiments of the present disclosure, a wheel speed of each driven wheel may be a rotation speed of each driven wheel, or may be a speed obtained by converting the rotation speed of each driven wheel into a speed at a centroid point. A conversion formula is as follows:

$$v_{CoG\_F1,F2} = (v_{F1,F2} \pm \dot{\phi}L_f)\cos(\delta_{1,2})$$ ,

and

$$v_{CoG\_R1,R2} = (v_{R1,R2} \pm \dot{\phi}L_r)$$ .

$v_{COG\_F1,F2}$ is a speed obtained by correcting a wheel speed of the front wheel to the speed at the centroid point, $v_{COG\_R1,R2}$ is a speed obtained by correcting a wheel speed of the rear wheel to the speed at the centroid point, $\varphi$ is a yaw rate of the vehicle, $L_r$ and $L_f$ are respectively a wheel base between the left front wheel and the right front wheel and a wheel base between the left rear wheel and the right rear wheel, and $\delta_{1,2}$ is a rotation angle between the left front wheel and the right front wheel.

In some embodiments of the present disclosure, a wheel speed correction amount of the left front wheel and the right front wheel of the vehicle is determined according to the first correction amount and the third correction amount, and a wheel speed correction amount of the left rear wheel and the right rear wheel of the vehicle is determined according to the second correction amount and the third correction amount.

It may be understood that, the axis at which the left front wheel and the right front wheel are located is the front axis of the vehicle, the axis at which the left rear wheel and the right rear wheel are located is the rear axis of the vehicle, and the third correction amount represents a correction amount for the front axis of the vehicle and a correction amount for the rear axis of the vehicle. Therefore, when the front axis is corrected, correction is performed based on the first correction amount and the third correction amount, and when the rear axis is corrected, correction is performed based on the second correction amount and the third correction amount.

In some embodiments of the present disclosure, that the first correction amount of the left front wheel and the right front wheel is determined according to the first wheel speed difference may include: determining the first correction amount of the left front wheel and the right front wheel of the vehicle according to the first wheel speed difference and a change rate of the first wheel speed difference when the first wheel speed difference is greater than the first preset speed threshold; and/or that the second correction amount of the left rear wheel and the right rear wheel of the vehicle is determined according to the second wheel speed difference may include: determining the second correction amount of the left rear wheel and the right rear wheel of the vehicle according to the second wheel speed difference and a change rate of the second wheel speed difference when the second wheel speed difference is greater than the second preset speed threshold; and/or that the third correction amount of the front axis and the rear axis of the vehicle is determined according to the axis speed difference may include: determining the third correction amount of the front axis and the rear axis of the vehicle according to the axis speed difference and a change rate of the axis speed difference when the axis speed difference is greater than the third preset speed threshold.

In some embodiments of the present disclosure, when the first wheel speed difference is greater than the first preset speed threshold, the first correction amount may be determined according to the first wheel speed difference and the change rate of the first wheel speed difference and by querying a preset relationship table of the first wheel speed difference-the front wheel correction amount. When the second wheel speed difference is greater than the second preset speed threshold, the second correction amount may be determined according to the second wheel speed difference and the change rate of the second wheel speed difference and by querying a preset relationship table of the second wheel speed difference-the rear wheel correction amount. When the axis speed difference is greater than the third preset speed threshold, the third correction amount may be determined according to the axis speed difference and the change rate of the axis speed difference and by querying a preset relationship table of the axis speed difference-the front and rear axis correction amount.

It should be noted that, adjustment on the torque allocation ratio of each driven wheel according to the first correction amount, the second correction amount, and the third correction amount may be independently performed. For example, when the first wheel speed difference is greater than the first preset speed threshold, the second wheel speed difference is less than the second preset speed threshold, and the axis speed difference is less than the third preset speed threshold, only the first correction amount is calculated, and the front wheels of the vehicle are corrected only according to the first correction amount.

In some embodiments of the present disclosure, that the basic torque allocation ratio is corrected according to the wheel speed correction amount may include: subtracting the first correction amount from a basic torque allocation ratio corresponding to either of the left front wheel and the right front wheel whose wheel speed is larger, and adding the first correction amount to a basic torque allocation ratio corresponding to either of the left front wheel and the right front wheel of the vehicle whose wheel speed is smaller; and/or subtracting the second correction amount from a basic torque allocation ratio corresponding to either of the left rear wheel and the right rear wheel of the vehicle whose wheel speed is larger, and adding the second correction amount to a basic torque allocation ratio corresponding to either of the left rear wheel and the right rear wheel of the vehicle whose wheel speed is smaller; and/or respectively subtracting a half of the third correction amount from a basic torque allocation ratio of either of the two driven wheels corresponding to either of the front axis and the rear axis of the vehicle whose axis speed is larger, and respectively adding the half of the third correction amount to a basic torque allocation ratio of either of the two driven wheels corresponding to either of the front axis and the rear axis of the vehicle whose axis speed is smaller.

For example, it is calculated according to the basic torque allocation ratio of the corresponding driven wheel that the torque allocation ratio of each of the four driven wheels is 0.25, and the obtained first correction amount is $\Delta x1$. If the wheel speed of the left front wheel is greater than the wheel speed of the right front wheel, the torque allocation ratio of the left front wheel is adjusted to $0.25-\Delta x1$, and the torque allocation ratio of the right front wheel is adjusted to $0.25+\text{A}x1$. If the wheel speed of the left front wheel is less than the wheel speed of the right front wheel, the torque allocation ratio of the left front wheel is adjusted to $0.25+\Delta x1$, and the torque allocation ratio of the right front wheel is adjusted to $0.25-\Delta x1$. If it is calculated according to the basic torque allocation ratio of the corresponding driven wheel that the torque allocation ratio of each of the four driven wheels is 0.25, and the obtained second correction amount is $\Delta x2$. If the wheel speed of the left rear wheel is greater than the wheel speed of the right rear wheel, the torque allocation ratio of the left rear wheel is adjusted to $0.25-\Delta x2$, and the torque allocation ratio of the right rear wheel is adjusted to $0.25+\Delta x2$. If the wheel speed of the left rear wheel is less than the wheel speed of the right rear wheel, the torque allocation ratio of the left rear wheel is adjusted to $0.25+\Delta x2$, and the torque allocation ratio of the right rear wheel is adjusted to $0.25-\Delta x2$. If the torque allocation ratio of the left front wheel of the vehicle that is obtained after adjustment is performed according to the first correction amount is $0.25-\Delta x1$, the obtained torque allocation ratio of the right front wheel is $0.25+\Delta x1$, the torque allocation ratio of the left rear wheel of the vehicle that is obtained after adjustment is performed according to the second correction amount is $0.25+\Delta x2$, the obtained torque allocation ratio of the right rear wheel is $0.25-\Delta x2$, and the calculated third correction amount is $\Delta x3$. If the wheel speed of the front axis is greater than the wheel speed of the rear axis, the torque allocation ratio of the left front wheel is adjusted to $0.25-\Delta x1-0.5\Delta x3$, the torque allocation ratio of the right front wheel is adjusted to $0.25+\Delta x1-0.5\Delta x3$, the torque allocation ratio of the left rear wheel is adjusted to $0.25+\Delta x2+0.5\Delta x3$, and the torque allocation ratio of the right rear wheel is adjusted to $0.25-\Delta x2+0.5\Delta x3$, and the torque allocation ratio of the right rear wheel is adjusted to $0.25-\Delta x2+0.5\Delta x3$. If the wheel speed of the front axis is less than the wheel speed of the rear axis, the torque allocation ratio of the left front wheel is adjusted to $0.25-\Delta x1+0.5\Delta x3$, the torque allocation ratio of the right front wheel is adjusted to $0.25+\Delta x1+0.5\Delta x3$, the torque allocation ratio of the left rear wheel is adjusted to $0.25+\Delta x2-0.5\Delta x3$, and the torque allocation ratio of the right rear wheel is adjusted to $0.25-\Delta x2-0.5\Delta x3$, so that torque allocation is performed based on a case in which the vehicle required torque is satisfied.

In some embodiments of the present disclosure, the wheel speed of each of the four driven wheels of the vehicle is obtained, to calculate the wheel speed difference between the wheels. To be specific, the wheel speed difference between the left front wheel and the right front wheel is calculated, the wheel speed difference between the left rear wheel and the right rear wheel is calculated, and the axis speed difference between the front axis at which the left front wheel and the right front wheel are located and the rear axis at which the left rear wheel and the right rear wheel are located are calculated. The basic torque allocation ratio of the vehicle is corrected according to the wheel speed difference and the axis speed difference. Safety of the vehicle during driving is considered, wear of tires can be reduced, and service life of the tires can be improved. In addition, the method for correcting the basic torque allocation ratio of the vehicle according to the wheel speed difference and the axis speed difference is simple and reliable. When a value of the wheel speed difference or the axis speed difference between the driven wheels of the vehicle exceeds a preset threshold, a response can be made in time, to ensure driving safety and improve user experience. It may be understood that, in the embodiments of the present disclosure, allocating the driving torque according to the dynamic load of each driven wheel is actually allocating the driving force according to the attachment capability of each wheel, so that not only can too early skidding of the wheels at the inner side be avoided, but also the excess grip of the wheels at the outer side can be avoided, to greatly prolong the length of the linear-like region, and increase the maximum speed during steady turning. After the driving torque is allocated according to the dynamic load, torques of the wheels at the inner side decrease and torques of the wheels at the outer side increase. In other words, the axis speed difference between the wheels at the inner side and the wheels at the outer side has a tendency to increase. If the axis speed difference is excessively large, longitudinal skidding easily occurs when a skidding ratio of the wheels at the outer side is excessively high, and tire wear is exacerbated. In this embodiment, after basic allocation is completed, the allocation ratio is corrected according to the axis speed difference, to reduce the tire wear.

In some embodiments of the present disclosure, it is determined that the first correction amount is zero when the first wheel speed difference is less than or equal to the first preset speed threshold; and/or it is determined that the second correction amount is zero when the second wheel speed difference is less than or equal to the second preset speed threshold; and/or it is determined that the third correction amount is zero when the axis speed difference is less than or equal to the third preset speed threshold.

It may be understood that, when the first wheel speed difference, the second wheel speed difference, or the axis speed difference is relatively small, the corresponding correction amount is zero, and when the correction amount is zero, it indicates that the rotation speed of the corresponding driven wheel of the vehicle does not need to be corrected.

In some embodiments of the present disclosure, the lateral dynamic information is determined according to a relationship between an actual yaw rate and an ideal yaw rate of the vehicle.

In some embodiments of the present disclosure, a difference between the actual yaw rate and the ideal yaw rate is calculated to determine whether the vehicle is oversteered or the vehicle is understeered, and further determine the lateral dynamic information of the vehicle.

It may be understood that, the ideal yaw rate indicates a relatively good linear correspondence between the steering wheel rotation angle and an actual rotation angle of the vehicle when the vehicle is steered according to the yaw rate. When the vehicle is oversteered, the actual rotation angle of the vehicle is greater than the rotation angle of the vehicle corresponding to the steering wheel rotation angle. When the vehicle is understeered, the actual rotation angle of the vehicle is less than the rotation angle of the vehicle corresponding to the steering wheel rotation angle. The lateral dynamic information of the vehicle may be determined by obtaining the relationship between the actual yaw rate and the ideal yaw rate of the vehicle.

In some embodiments of the present disclosure, the ideal yaw rate may be determined according to a speed of the vehicle, a track width of the vehicle, and a front wheel rotation angle of the vehicle in a two-degree-of-freedom model.

For example, the ideal yaw rate can be obtained by calculation through the following formula:

$$\dot{\varphi}_i = \frac{v/L}{1 + Kv^2} \delta_f \quad .$$

$\dot{\varphi}_i$ is the ideal yaw rate, $v$ is a speed of the vehicle, L is a track width of the vehicle, K is a stability factor that may be obtained through an experiment, and $\delta_f$ is the front wheel rotation angle in the two-degree-of-freedom model.

In some embodiments of the present disclosure, the driven wheels include a left front wheel, a right front wheel, a left rear wheel, and a right rear wheel, an axis at which the left front wheel and the right front wheel are located is a front axis of the vehicle, and an axis at which the left rear wheel and the right rear wheel are located is a rear axis of the vehicle. Determining, according to lateral dynamic information, a steering correction amount of the torque allocation ratio of each driven wheel includes: determining, when the actual yaw rate is greater than the ideal yaw rate and a difference between the actual yaw rate and the ideal yaw rate is greater than a fourth preset speed threshold, a front axis oversteering correction amount, a rear axis oversteering correction amount, and a front and rear axis oversteering correction amount according to the difference between the actual yaw rate and the ideal yaw rate; or determining, when the actual yaw rate is less than the ideal yaw rate and a difference between the ideal yaw rate and the actual yaw rate is greater than a fifth preset speed threshold, a front axis understeering correction amount, a rear axis understeering correction amount, and a front and rear axis understeering correction amount according to the difference between the ideal yaw rate and the actual yaw rate.

Specifically, the difference between the actual yaw rate and the ideal yaw rate of the vehicle is determined. When the difference exceeds a corresponding preset speed threshold, it indicates that the vehicle is understeered or oversteered, and torques of the front axis and the rear axis of the vehicle need to be further corrected. A correction amount may be determined according to the difference between the actual yaw rate and the ideal yaw rate.

In some embodiments of the present disclosure, when the actual yaw rate is greater than the ideal yaw rate, and the difference between the actual yaw rate and the ideal yaw rate is greater than the fourth preset speed threshold, it indicates that the vehicle is oversteered, and the front axis oversteering correction amount, the rear axis oversteering correction amount, and the front and rear axis oversteering correction amount are calculated according to the difference. When the actual yaw rate is less than the ideal yaw rate, and the difference between the actual yaw rate and the ideal yaw rate is greater than the fifth preset speed threshold, it indicates that the vehicle is understeered, and the front axis understeering correction amount, the rear axis understeering correction amount, and the front and rear axis understeering correction amount are calculated according to the difference.

In some embodiments of the present disclosure, the oversteering correction amount and the understeering correction amount may be obtained in a table querying manner. The difference between the actual yaw rate and the ideal yaw rate is input, to find the corresponding front axis oversteering correction amount, the corresponding rear axis oversteering correction amount, and the corresponding front and rear axis oversteering correction amount from a preset relationship table of the corresponding yaw rate difference-the oversteering correction amount, or find the corresponding front axis understeering correction amount, the corresponding rear axis understeering correction amount, and the corresponding front and rear axis understeering correction amount from a preset relationship table of the corresponding yaw rate difference-the understeering correction amount.

In some embodiments of the present disclosure, that the basic torque allocation ratio is corrected according to the steering correction amount when the actual yaw rate is greater than the ideal yaw rate and the difference between the actual yaw rate and the ideal yaw rate is greater than the fourth preset speed threshold includes: adding the front axis oversteering correction amount to a basic torque allocation ratio of a steered wheel at an inner side of either of the left front wheel and the right front wheel, and subtracting the front axis oversteering correction amount from a basic torque allocation ratio of a steered wheel at an outer side of either of the left front wheel and the right front wheel; adding the rear axis oversteering correction amount to a basic torque allocation ratio of a steered wheel at an inner side of either of the left rear wheel and the right rear wheel, and subtracting the rear axis oversteering correction amount from a basic torque allocation ratio of a steered wheel at an outer side of either of the left rear wheel and the right rear wheel; and adding a half of the front and rear axis oversteering correction amount to the basic torque allocation ratio of the left front wheel and the right front wheel, and subtracting the half of the front and rear axis oversteering correction amount from the basic torque allocation ratio of the left rear wheel and the right rear wheel.

A magnitude relationship between the actual yaw rate and the ideal yaw rate of the vehicle is obtained, to determine the front axis oversteering correction amount and the rear axis oversteering correction amount of the vehicle, and the steering correction amount is further used to correct the torque allocation ratios of the left front wheel, the right front wheel, the left rear wheel, and the right rear wheel of the vehicle. In this way, correction in multiple dimensions among the four wheels of the vehicle is fully considered, and stability of the vehicle is improved during steering. When the vehicle is understeered or oversteered, a response can be made in time. The torque allocation ratios of the wheels are corrected according to the steering correction amount, to ensure safety of the vehicle during turning.

For example, the current basic torque allocation ratio of the vehicle is [0.25 (the left front wheel), 0.25 (the right front wheel), 0.25 (the left rear wheel), and 0.25 (the right rear wheel)]. When the actual yaw rate is greater than the ideal yaw rate, the difference that is obtained by subtracting the ideal yaw rate from the actual yaw rate is input, and the corresponding front axis oversteering correction amount, the corresponding rear axis oversteering correction amount, and the corresponding front and rear axis oversteering correction amount that are respectively $\Delta y1$, $\Delta y2$, and $\Delta y3$ are obtained through table querying. If the vehicle is currently performing left steering, the left front wheel and the left rear wheel are the wheels at the inner side, and the right front wheel and the right rear wheel are the wheels at the outer side. In this case, the torque allocation ratio of the left front wheel is adjusted to $0.25+\Delta y1+0.5\Delta y3$, the torque allocation ratio of the right front wheel is adjusted to $0.25-\Delta y1+0.5\Delta y3$, the torque allocation ratio of the left rear wheel is adjusted to $0.25+\Delta y1-0.5\Delta y3$, and the torque allocation ratio of the right rear wheel is adjusted to $0.25-\Delta y1-0.5\Delta y3$. In this way, after final adjustment, an allocation ratio of each driven wheel is $[0.25+\Delta y1+\Delta y3/2, 0.25-\Delta y1+0.5\Delta y3, 0.25+\Delta y1-0.5\Delta y3,$ and $0.25-\Delta y1-0.5\Delta y3]$.

In some embodiments of the present disclosure, that the basic torque allocation ratio is corrected according to the steering correction amount when the actual yaw rate is less than the ideal yaw rate and a difference between the ideal yaw rate and the actual yaw rate is greater than a fifth preset speed threshold may further include: subtracting the front axis understeering correction amount from the basic torque allocation ratio of the steered wheel at the inner side of either of the left front wheel and the right front wheel of the vehicle, and adding the front axis understeering correction amount to the basic torque allocation ratio of the steered wheel at the outer side of either of the left front wheel and the right front wheel of the vehicle; subtracting the rear axis understeering correction amount from the basic torque allocation ratio of the steered wheel at the inner side of either of the left rear wheel and the right rear wheel of the vehicle, and adding the rear axis understeering correction amount to the basic torque allocation ratio of the steered wheel at the outer side of either of the left rear wheel and the right rear wheel of the vehicle; and respectively subtracting the half of the front and rear axis understeering correction amount from the basic torque allocation ratio of the left front wheel and the right front wheel, and respectively adding the half of the front and rear axis understeering correction amount to the basic torque allocation ratio of the left rear wheel and the right rear wheel.

For example, the current basic torque allocation ratio of the vehicle is [0.25 (the left front wheel), 0.25 (the right front wheel), 0.25 (the left rear wheel), and 0.25 (the right rear wheel)]. When the actual yaw rate is less than the ideal yaw rate, the difference that is obtained by subtracting the ideal yaw rate from the actual yaw rate is input, and the corresponding front axis understeering correction amount, the corresponding rear axis understeering correction amount, and the corresponding front and rear axis understeering correction amount that are respectively $\Delta s1$, $\Delta s2$, and $\Delta s3$ are obtained through table querying. If the vehicle is currently performing left steering, the left front wheel and the left rear wheel are the wheels at the inner side, and the right front wheel and the right rear wheel are the wheels at the outer side. In this case, the torque allocation ratio of the left front wheel is adjusted to $0.25-\Delta s1-0.5\Delta s3$, the torque allocation ratio of the right front wheel is adjusted to $0.25+\Delta s1-0.5\Delta s3$, the torque allocation ratio of the left rear wheel is adjusted to $0.25-\Delta s1+0.5\Delta s3$, and the torque allocation ratio of the right rear wheel is adjusted to $0.25-\Delta s1+0.5\Delta s3$. In this way, after final adjustment, an allocation ratio of each driven wheel is $[0.25-\Delta s1-0.5\Delta s3, 0.25+\Delta s1-0.5\Delta s3, 0.25-\Delta s1+0.5\Delta s3,$ and $0.25+\Delta s1+0.5\Delta s3]$.

According to the embodiments provided in the present disclosure, after the driving torque is allocated according to the dynamic load, torques of the wheels at the inner side are reduced and torques of the wheels at the outer side are increased. That is, the vehicle generates an additional yaw moment. Under the additional action of the yaw moment, a turning feature of the vehicle may be understeering or oversteering, which affects stability of the vehicle. Therefore, in the embodiments of the present disclosure, after basic allocation is completed, the allocation ratio is corrected according to the difference between the actual yaw rate and the ideal yaw rate, to ensure the stability of the vehicle.

In some embodiments of the present disclosure, when the actual yaw rate is greater than the ideal yaw rate and the difference between the actual yaw rate and the ideal yaw rate is less than or equal to the fourth preset speed threshold, it is determined that the front axis oversteering correction amount, the rear axis oversteering correction amount, and the front and rear axis oversteering correction amount of the vehicle are respectively zero; or when the actual yaw rate is less than the ideal yaw rate and the difference between the ideal yaw rate and the actual yaw rate is less than or equal to the fifth preset speed threshold, it is determined that the front axis understeering correction amount, the rear axis understeering correction amount, and the front and rear axis understeering correction amount of the vehicle are respectively zero.

In some embodiments of the present disclosure, the driven wheels include the left front wheel, the right front wheel, the left rear wheel, and the right rear wheel, the axis at which the left front wheel and the right front wheel are located is the front axis of the vehicle, and the axis at which the left rear wheel and the right rear wheel are located is the rear axis of the vehicle. The method further includes: determining that the torque vector control function of the vehicle is activated when an accelerator pedal depth change rate obtained by pedaling an accelerator pedal of the vehicle is greater than a first preset accelerator pedal depth change rate threshold, or when an accelerator pedal depth change rate obtained by releasing the accelerator pedal is less than a second preset accelerator pedal depth change rate threshold; determining that the torque vector control function of the vehicle is activated when a steering wheel rotation angle change rate of the vehicle is greater than a preset steering wheel rotation angle change rate threshold; determining that the torque vector control function of the vehicle is activated when the lateral acceleration is greater than a preset lateral acceleration threshold; determining that the torque vector control function of the vehicle is activated when a wheel speed difference between the left front wheel and the right front wheel is greater than the first preset speed threshold; determining that the torque vector control function of the vehicle is activated when a wheel speed difference between the left rear wheel and the right rear wheel is greater than the second preset speed threshold; determining that the torque vector control function of the vehicle is activated when the axis speed difference between the front axis and the rear axis is greater than the third preset speed threshold; determining that the torque vector control function of the vehicle is activated when the difference between the actual yaw rate and the ideal yaw rate of the vehicle is greater than the fourth preset speed threshold; or determining that the torque vector control function of the vehicle is activated when the difference between the ideal yaw rate and the actual yaw rate of the vehicle is greater than the fifth preset speed threshold.

In other words, when one of requirements such as an acceleration requirement, a deceleration requirement, and a steering requirement of the vehicle is at a relatively high level, the torque vector control function is activated, thereby implementing precise control of "activating the torque vector control function when there is a need, and inactivating the torque vector control function when there is no need".

In some embodiments of the present disclosure, the first preset accelerator pedal change rate depth threshold and the second preset accelerator pedal change rate depth threshold are determined according to the lateral acceleration of the vehicle, and the preset steering wheel rotation angle change rate threshold, the preset lateral acceleration threshold, the first preset speed threshold, the second preset speed threshold, the third preset speed threshold, the fourth preset speed threshold, and the fifth preset speed threshold are determined according to a current speed of the vehicle.

In some embodiments of the present disclosure, the first preset accelerator pedal depth change rate threshold is determined according to the lateral acceleration of the vehicle and by querying a preset relationship table of the lateral acceleration-the depth change rate obtained by pedaling the accelerator pedal. The second preset accelerator pedal depth change rate threshold is determined according to the lateral acceleration of the vehicle and by querying a preset relationship table of the lateral acceleration-the depth change rate obtained by releasing the accelerator pedal. The first preset speed threshold is determined according to a current speed of the vehicle and by querying a preset relationship table of a speed-a first speed. The second preset speed threshold is determined according to a current speed of the vehicle and by querying a preset relationship table of a speed-a second speed. The third preset speed threshold is determined according to a current speed of the vehicle and by querying a preset relationship table of a speed-a third speed. The fourth preset speed threshold is determined according to a current speed of the vehicle and by querying a preset relationship table of a speed-a fourth speed. The fifth preset speed threshold is determined according to a current speed of the vehicle and by querying a preset relationship table of a speed-a fifth speed.

It should be noted that, the preset relationship table of the lateral acceleration-the depth change rate obtained by pedaling the accelerator pedal, the preset relationship table of the lateral acceleration-the depth change rate obtained by releasing the accelerator pedal, the preset relationship table of the speed-the first speed, the preset relationship table of the speed-the second speed, the preset relationship table of the speed-the third speed, the preset relationship table of the speed-the fourth speed, and the preset relationship table of the speed-the fifth speed may be set according to an actual requirement, or may be set according to an empirical value of a person skilled in the art, or may be obtained by performing an experiment on the vehicle. This is not specifically limited in the present disclosure.

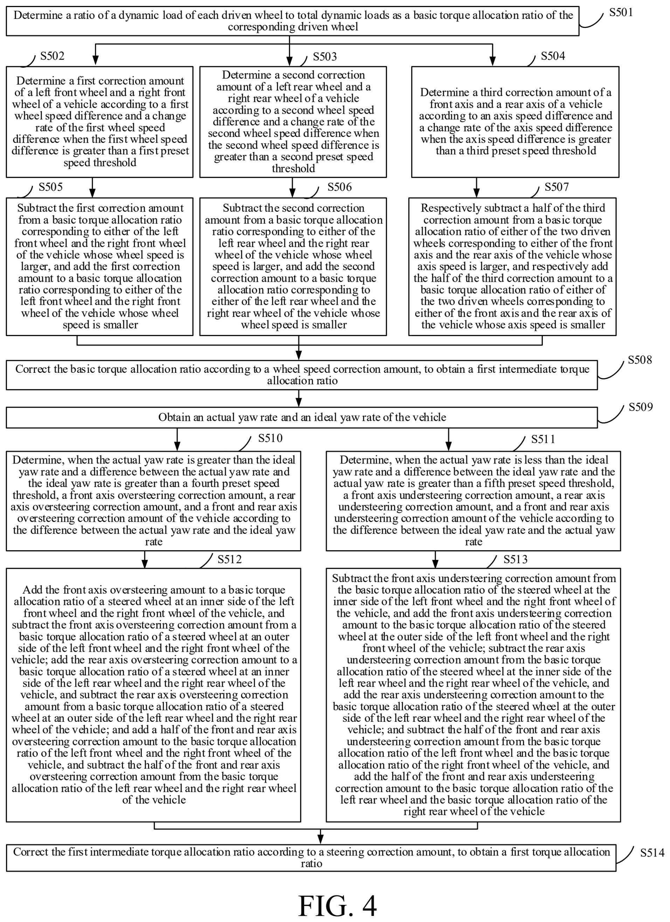

In some embodiments of the present disclosure, the basic torque allocation ratio may be corrected according to the wheel speed correction amount and the steering correction amount, to obtain the first torque allocation ratio of each driven wheel. A specific procedure is shown in FIG. 4. First, a basic torque allocation ratio of a corresponding driven wheel is calculated according to step S501, and a process of correcting the basic torque allocation ratio according to a wheel speed correction amount is completed according to step S502 to step S508. Step S502, step S503, and step S504 may be independently performed or may be performed in parallel. Based on step 508, a process of performing correction according to a steering correction amount is completed according to step S509 to step S514. Either of step S510 and step S511 is selected to perform according to a determining condition, and finally a first torque allocation ratio of each driven wheel is obtained.

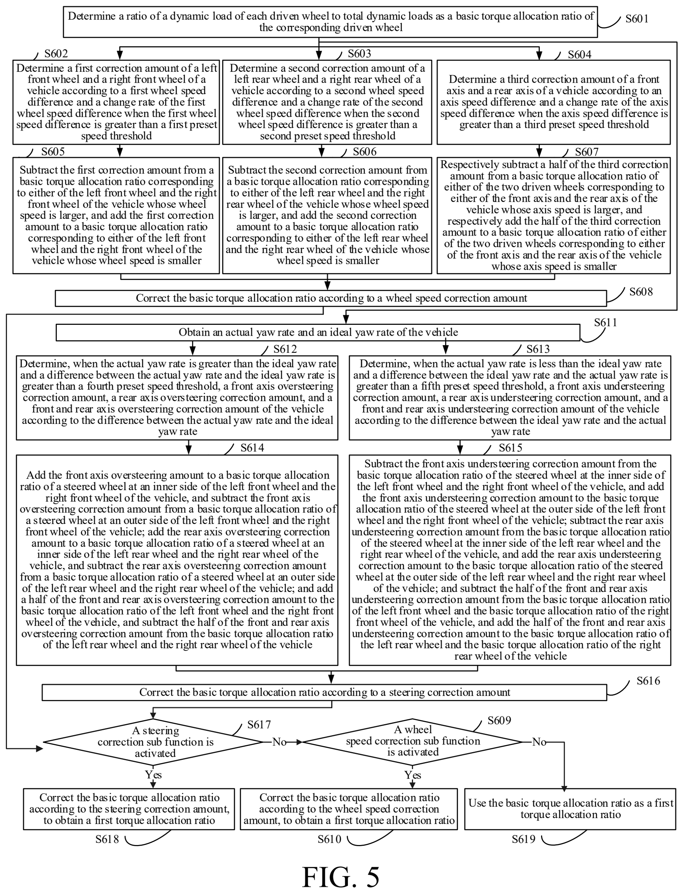

In some embodiments of the present disclosure, the basic torque allocation ratio may be corrected according to the wheel speed correction amount or the steering correction amount, to obtain the first torque allocation ratio of each driven wheel. A specific procedure is shown in FIG. 5. First, a basic torque allocation ratio of a corresponding driven wheel is calculated according to step S601. Based on step S601, a process of correcting the basic torque allocation ratio according to the wheel speed correction amount is completed according to step S602 to step S608. Step S602, step S603, and step S604 may be performed independently or may be performed in parallel. Alternatively, based on step S601, a process of correcting the basic torque allocation ratio according to the steering correction amount is completed according to S611 to S616. Either of step S612 and step S613 is selected to be performed according to a determining condition. Independent or parallel decision-making may be performed according to a wheel speed correction sub function and a steering correction sub function, and a priority of torque allocation correction of the steering correction sub function is higher than a priority of torque allocation correction of the wheel speed correction sub function. Specifically, when both the wheel speed correction sub function and the steering correction sub function are in active states, or when the wheel speed correction sub function is in an inactive state and the steering correction sub function is in an active state, final allocation of a torque requirement of each driven wheel is completed according to step S601 and step S611 to step S618. When the wheel speed correction sub function is in an active state and the steering correction sub function is in an inactive state, final allocation of a torque requirement of each driven wheel is completed according to step S601 to step S610. When both the wheel speed correction sub function and the steering correction sub function are in inactive states, step S619 is performed, and final allocation of a torque requirement of each driven wheel is performed according to the basic torque allocation ratio in step S601.

In some embodiments of the present disclosure, the driven wheels include the left front wheel, the right front wheel, the left rear wheel, and the right rear wheel, the axis at which the left front wheel and the right front wheel are located is the front axis of the vehicle, and the axis at which the left rear wheel and the right rear wheel are located is the rear axis of the vehicle. The method further includes: determining a torque allocation ratio of the front axis and a torque allocation ratio of the rear axis according to the vehicle required torque of the vehicle when the torque vector control function is not activated, evenly allocating the torque allocation ratio corresponding to the front axis to the left front wheel and the right front wheel, and evenly allocating the torque allocation ratio corresponding to the rear axis to the left rear wheel and the right rear wheel, to determine a second torque allocation ratio of the corresponding driven wheel; and determining a second allocation torque of the corresponding driven wheel according to the vehicle required torque of the vehicle and the second torque allocation ratio of each driven wheel.

In some embodiments of the present disclosure, the torque allocation ratio of the front axis and the torque allocation ratio of the rear axis are determined according to the vehicle required torque of the vehicle and by querying an economy torque allocation table, to obtain a torque allocation manner of the front axis and the rear axis that has the highest efficiency.

In some embodiments of the present disclosure, the driven wheels include a left front wheel, a right front wheel, a left rear wheel, and a right rear wheel, an axis at which the left front wheel and the right front wheel are located is a front axis of the vehicle, and an axis at which the left rear wheel and the right rear wheel are located is a rear axis of the vehicle. When the accelerator pedal depth change rate obtained by pedaling the accelerator pedal of the vehicle is less than or equal to a first preset accelerator pedal depth change rate threshold, or when the accelerator pedal depth change rate obtained by releasing the accelerator pedal is greater than or equal to a second preset accelerator pedal depth change rate threshold; when the steering wheel rotation angle change rate of the vehicle is less than or equal to the preset steering wheel rotation angle change rate threshold; when the lateral acceleration is less than or equal to the preset lateral acceleration threshold; when the wheel speed difference between the left front wheel and the right front wheel is less than or equal to the first preset speed threshold; when the wheel speed difference between the left rear wheel and the right rear wheel is less than or equal to the second preset speed threshold; when the axis speed difference between the front axis and the rear axis is less than or equal to the third preset speed threshold; when the difference between the actual yaw rate and the ideal yaw rate of the vehicle is less than or equal to the fourth preset speed threshold; and when the difference between the ideal yaw rate and the actual yaw rate of the vehicle is less than or equal to the fifth preset speed threshold, determining that the torque vector control function of the vehicle is not activated.

According to the power control method for a vehicle according to the embodiments of the present disclosure, when the torque vector control function of the vehicle is activated, a first torque allocation ratio of each driven wheel is determined according to a dynamic load of each driven wheel of the vehicle. A first allocation torque of the corresponding driven wheel is determined according to the vehicle required torque of the vehicle and the first torque allocation ratio of each driven wheel. When the corresponding driven wheel is driven according to the first allocation torque of each driven wheel and a steering wheel rotation angle of the vehicle is a set angle, an area that is obtained when a mapping curve between the turning radius and the lateral acceleration of the vehicle is a first curve is less than an area that is obtained when a mapping curve between the turning radius and the lateral acceleration of the vehicle is a second curve when the torque vector control function is not activated. In this way, when the torque vector control function of the vehicle is activated, a speed is the highest under the same vehicle condition, under the same road condition, and in the same curve, and a turning radius is the smallest at the same speed. When the vehicle turns at a high speed, stability of the vehicle is ensured, thereby protecting property and personal safety of a user.

Further, the basic torque allocation ratio of the corresponding driven wheel is determined according to a ratio of a dynamic load of each driven wheel to a total load. A wheel speed correction amount of the torque allocation ratio of each driven wheel is determined according to wheel speed difference information among the driven wheels, and a steering correction amount of the torque allocation ratio of each driven wheel is determined according to lateral dynamic information. The basic torque allocation ratio is corrected according to the wheel speed correction amount and/or the steering correction amount, to obtain the first torque allocation ratio of each driven wheel. An allocation torque of the corresponding driven wheel is determined according to a vehicle required torque and the first torque allocation ratio of each driven wheel, to use the vehicle required torque as a basis of allocating a torque to each driven wheel. The basic torque allocation ratio is determined by using a dynamic load of each driven wheel on the vehicle, and the basic torque allocation ratio is adjusted according to the wheel speed difference information, to further reduce a degree of tire wear. In addition, correction is performed on the torque allocation ratio according to the lateral dynamic information of the vehicle, to ensure stability of the vehicle during steering, without reducing power of the vehicle, thereby improving driving experience of a user, further improving lateral dynamic performance of the vehicle while ensuring a torque requirement, and performing torque allocation on each driven wheel according to a set control policy. An effect of torque control is fully exerted, and both a power requirement and driving stability of the vehicle are considered.

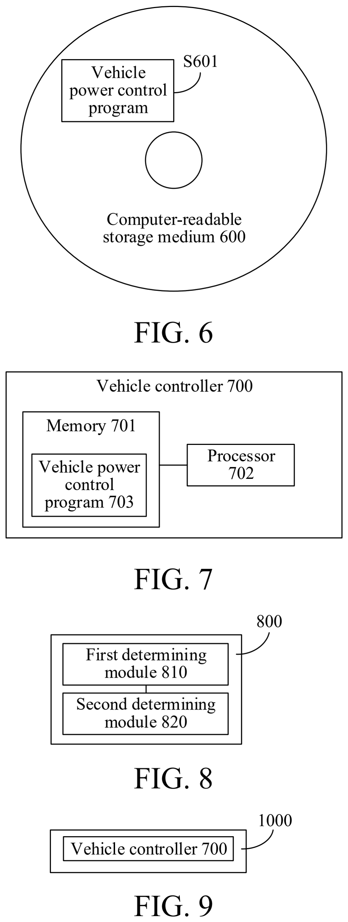

FIG. 6 is a schematic diagram of a structure of a computer-readable storage medium according to an embodiment of the present disclosure.

As shown in FIG. 6, the computer-readable storage medium 600 stores a vehicle power control program 601. When the vehicle power control program 601 is executed by a processor, the power control method for a vehicle according to an embodiment of the first aspect in the present disclosure is implemented.

To implement the foregoing embodiment, the present disclosure further provides a vehicle controller. FIG. 7 is a schematic diagram of a structure of a vehicle controller according to an embodiment of the present disclosure.

As shown in FIG. 7, the vehicle controller 700 includes a memory 701, a processor 702, and a vehicle power control program 703 stored in the memory 701 and executable on the processor 702. When the vehicle power control program 703 is executed by the processor, the power control method for a vehicle according to an embodiment of the first aspect in the present disclosure is implemented.

Corresponding to the several embodiments mentioned in the first aspect of the present disclosure, an embodiment of the present disclosure further provides a vehicle power control device. Because the vehicle power control device provided in the embodiments of the present disclosure corresponds to the power control method for a vehicle provided in the foregoing several embodiments, implementations of the foregoing power control method for a vehicle are also applicable to the vehicle power control device provided in the embodiments. Details are not described in the embodiments again. FIG. 8 is a schematic diagram of a structure of a vehicle power control device according to an embodiment of the present disclosure.

As shown in FIG. 8, the vehicle power control device 800 may include: a first determining module 810 and a second determining module 820.

The first determining module 810 is configured to determine, according to a dynamic load of each driven wheel of a vehicle, a first torque allocation ratio of each driven wheel if a torque vector control function is activated. The second determining module 820 is configured to determine a first allocation torque of the corresponding driven wheel according to a vehicle required torque of the vehicle and the first torque allocation ratio of each driven wheel. When the corresponding driven wheel is driven according to the first allocation torque of each driven wheel and a steering wheel rotation angle of the vehicle is a set angle, a mapping curve between a turning radius and a lateral acceleration of the vehicle is a first curve, and an integral of the first curve over a set lateral acceleration interval is a first area. If the torque vector control function is not activated and when the steering wheel rotation angle of the vehicle turns according to the set angle, a mapping curve between a turning radius and a lateral acceleration of the vehicle is a second curve, an integral of the second curve over the set lateral acceleration interval is a second area, and the first area is less than the second area.

To implement the foregoing embodiments, the present disclosure further provides a vehicle. FIG. 9 is a schematic diagram of a structure of a vehicle according to an embodiment of the present disclosure.

As shown in FIG. 9, the vehicle 1000 includes a vehicle controller 700 according to the foregoing embodiments of the present disclosure.

In addition, other components and functions of the vehicle in the embodiments of the present disclosure are known to a person skilled in the art. To reduce redundancy, details are not described herein again.

It should be noted that, the logic and/or steps shown in the flowcharts or described in any other manner herein, for example, a sequenced list that may be considered as executable instructions used for implementing logical functions, may be specifically implemented in any computer-readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the context of this specification, a "computer-readable medium" may be any apparatus that can include, store, communicate, propagate, or transmit the program for use by the instruction execution system, apparatus, or device or in combination with the instruction execution system, apparatus, or device. More specific examples (a nonexhaustive list) of the computer-readable medium include the following: an electrical connection (electronic device) having one or more wires, a portable computer diskette (magnetic apparatus), a random access memory (RAM), a read-only memory (ROM), an erasable programmable read-only memory (EPROM or flash memory), an optical fiber apparatus, and a portable compact disk read-only memory (CDROM). In addition, the computer-readable medium can even be paper or other suitable media on which the program can be printed, because the program can be obtained electronically by, for example, optically scanning paper or other media, then editing, interpreting, or processing in other suitable ways if necessary, and then storing it in a computer memory.

It should be understood that, each part of this application can be implemented by hardware, software, firmware or a combination thereof. In the foregoing implementations, a plurality of steps or methods may be implemented by using software or firmware that are stored in a memory and are executed by a proper instruction execution system. For example, if being implemented by hardware, like another implementation, the plurality of steps or methods may be implemented by any one of following common technologies in the art or a combination thereof: a discrete logic circuit of a logic gate circuit for realizing a logic function for a data signal, an application specific integrated circuit having a suitable combined logic gate circuit, a programmable gate array (PGA), and a field programmable gate array (FPGA).

In the description of this specification, the description of the reference terms "an embodiment", "some embodiments", "an example", "a specific example", "some examples", and the like means that specific features, structures, materials or characteristics described in combination with the embodiment(s) or example(s) are included in at least one embodiment or example of the present disclosure. In this specification, schematic descriptions of the foregoing terms do not necessarily point at a same embodiment or example. In addition, the described specific features, structures, materials, or characteristics may be combined in a proper manner in any one or more of the embodiments or examples.

In the description of the present disclosure, it should be understood that, orientations or position relationships indicated by terms such as "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present disclosure and simplifying the description, rather than indicating or implying that the apparatus or element should have a particular orientation or be constructed and operated in a particular orientation, and therefore, should not be construed as a limitation on the present disclosure.

In addition, terms "first" and "second" used in the embodiments of the present disclosure are only used to describe the objective and cannot be understood as indicating or implying relative importance or implying a quantity of the indicated technical features in the embodiments. Therefore, features defining terms "first" and "second" in the embodiments of the present disclosure can explicitly or implicitly indicate that at least one of the features is included in the embodiments. In the descriptions of the present disclosure, unless otherwise specifically limited in the embodiments, the term "multiple" means at least two or two or more, for example, two, three, or four.

In the present disclosure, unless otherwise explicitly stated or defined in the embodiments, the terms "mounting", "connected", "connection", "fixed", and the like that appear in the embodiments are to be construed broadly, for example, as fixed connection, detachable connection or integral connection, as mechanical connection or electrical connection, and as direct connection or indirect connection via an intermediary or communication inside two elements or interaction between two elements. A person of ordinary skill in the art can understand specific meanings of the terms in the disclosure according to specific implementation situations.

In the disclosure, unless explicitly specified or limited otherwise, a first characteristic "on" or "under" a second characteristic may be the first characteristic in direct contact with the second characteristic, or the first characteristic in indirect contact with the second characteristic by using an intermediate medium. In addition, the first feature being located "above" the second feature may be the first feature being located directly above or obliquely above the second feature, or may simply indicate that the first feature is higher in level than the second feature. That the first feature is "below", "under", and "beneath" the second feature may be that the first feature is right below the second feature or at an inclined bottom of the second feature, or may merely indicate that the horizontal position of the first feature is lower than that of the second feature.

Although the embodiments of the present disclosure have been shown and described above, it can be understood that, the foregoing embodiments are exemplary and should not be understood as limitation to the present disclosure. A person of ordinary skill in the art can make changes, modifications, replacements, or variations to the foregoing embodiments within the scope of the present disclosure.

## Claims

1. A power control method for a vehicle, comprising:

    determining, according to a dynamic load of each driven wheel of a vehicle, a first torque allocation ratio of each driven wheel if a torque vector control function is activated; and
    determining a first allocation torque of the corresponding driven wheel according to a vehicle required torque of the vehicle and the first torque allocation ratio of each driven wheel,
    wherein when the corresponding driven wheel is driven according to the first allocation torque of each driven wheel and a steering wheel rotation angle of the vehicle is a set angle, a mapping curve between a turning radius and a lateral acceleration of the vehicle is a first curve, and an integral of the first curve over a set lateral acceleration interval is a first area,
    wherein if the torque vector control function is not activated and when the steering wheel rotation angle of the vehicle turns according to the set angle, a mapping curve between a turning radius and a lateral acceleration of the vehicle is a second curve, an integral of the second curve over the set lateral acceleration interval is a second area, and the first area is less than the second area.

2. The power control method for a vehicle according to claim 1, wherein at a same turning radius, a lateral acceleration corresponding to the first curve is greater than a lateral acceleration corresponding to the second curve.

3. The power control method for a vehicle according to claim 1 or 2, wherein at a same speed, a turning radius corresponding to the first curve is less than a turning radius corresponding to the second curve.

4. The power control method for a vehicle according to any one of claims 1 to 3, wherein a length of the set lateral acceleration interval accounts for 30% to 40% of a lower limit value of the set lateral acceleration interval.

5. The power control method for a vehicle according to any one of claims 1 to 4, wherein determining, according to the dynamic load of each driven wheel of the vehicle, the first torque allocation ratio of each driven wheel comprises:

    determining a basic torque allocation ratio of each driven wheel according to the dynamic load of each driven wheel;
    determining, according to wheel speed difference information of the vehicle, a wheel speed correction amount of a torque allocation ratio of each driven wheel, and determining, according to lateral dynamic information of the vehicle, a steering correction amount of the torque allocation ratio of each driven wheel; and
    correcting the basic torque allocation ratio according to the wheel speed correction amount and/or the steering correction amount, to obtain the first torque allocation ratio of each driven wheel.

6. The power control method for a vehicle according to claim 5, wherein determining the basic torque allocation ratio of the corresponding driven wheel according to the dynamic load of each driven wheel comprises:
    determining a ratio of the dynamic load of each driven wheel to total dynamic loads as the basic torque allocation ratio of the corresponding driven wheel, wherein a sum of dynamic loads of the driven wheels is equal to the total dynamic loads.

7. The power control method for a vehicle according to claim 6, wherein the dynamic load of each driven wheel is determined according to a total mass of the vehicle and a longitudinal acceleration and the lateral acceleration of the vehicle.

8. The power control method for a vehicle according to claim 7, wherein the driven wheels comprise a left front wheel, a right front wheel, a left rear wheel, and a right rear wheel, an axis at which the left front wheel and the right front wheel are located is a front axis of the vehicle, and an axis at which the left rear wheel and the right rear wheel are located is a rear axis of the vehicle; and

    the dynamic load of each driven wheel is calculated according to the following formula:

$$F_{z11,D} = \frac{mgb}{2L} - \frac{ma_x h_g}{2L} - \frac{ma_y h_g}{bL_f + aL_r} b \;,$$

$$F_{z12,D} = \frac{mgb}{2L} - \frac{ma_x h_g}{2L} + \frac{ma_y h_g}{bL_f + aL_r} b \;,$$

$$F_{z21,D} = \frac{mga}{2L} + \frac{ma_x h_g}{2L} - \frac{ma_y h_g}{bL_f + aL_r} a \;,$$

and

$$F_{z22,D} = \frac{mga}{2L} + \frac{ma_x h_g}{2L} + \frac{ma_y h_g}{bL_f + aL_r} a \;,$$

wherein $F_{Z11,D}$, $F_{Z12,D}$, $F_{Z21,D}$, and $F_{Z22,D}$ are the dynamic load of the left front wheel, the dynamic load of the right front wheel, the dynamic load of the left rear wheel, and the dynamic load of the right rear wheel respectively, m is the total mass of the vehicle, a and b are a distance between the front axis and a centroid point and a distance between the rear axis and the centroid point respectively, $h_g$ is a height of the centroid point of the vehicle, L is a track width of the vehicle, $L_f$ is a wheel base between the left front wheel and the right front wheel, $L_r$ is a wheel base between the left rear wheel and the right rear wheel, g is a gravitational acceleration, $a_x$ is the longitudinal acceleration of the vehicle, and $a_y$ is the lateral acceleration of the vehicle.

9. The power control method for a vehicle according to any one of claims 5 to 8, wherein correcting the basic torque allocation ratio according to the wheel speed correction amount and the steering correction amount comprises:

   determining a first intermediate torque allocation ratio according to the wheel speed correction amount and the basic torque allocation ratio, and determining the first torque allocation ratio according to the steering correction amount and the first intermediate torque allocation ratio; or determining a second intermediate torque allocation ratio according to the steering correction amount and the basic torque allocation ratio, and determining the first torque allocation ratio according to the wheel speed correction amount and the second intermediate torque allocation ratio.

10. The power control method for a vehicle according to any one of claims 5 to 9, wherein correcting the basic torque allocation ratio according to the wheel speed correction amount or the steering correction amount comprises:

   if a steering correction sub function of the vehicle is activated, determining the first torque allocation ratio according to the steering correction amount and the basic torque allocation ratio; if a steering correction sub function of the vehicle is not activated and a wheel speed correction sub function of the vehicle is activated, determining the first torque allocation ratio according to the wheel speed correction amount and the basic torque allocation ratio; or if a steering correction sub function of the vehicle is not activated and a wheel speed correction sub function of the vehicle is not activated, using the basic torque allocation ratio as the first torque allocation ratio.

11. The power control method for a vehicle according to claim 10, wherein the driven wheels comprise the left front wheel, the right front wheel, the left rear wheel, and the right rear wheel, the axis at which the left front wheel and the right front wheel are located is the front axis of the vehicle, and the axis at which the left rear wheel and the right rear wheel are located is the rear axis of the vehicle; and the wheel speed difference information comprises a first wheel speed difference between the left front wheel and the right front wheel, a second wheel speed difference between the left rear wheel and the right rear wheel, and an axis speed difference between the front axis and the rear axis; and the method further comprises:

   when the first wheel speed difference is greater than a first preset speed threshold, determining that the wheel speed correction sub function of the vehicle is activated; when the second wheel speed difference is greater than a second preset speed threshold, determining that the wheel speed correction sub function of the vehicle is activated; or when the axis speed difference is greater than a third preset speed threshold, determining that the wheel speed correction sub function of the vehicle is activated.

12. The power control method for a vehicle according to claim 10 or 11, wherein the lateral dynamic information is determined according to a relationship between an actual yaw rate and an ideal yaw rate of the vehicle; and the method further comprises:

   determining that the steering correction sub function of the vehicle is activated when the actual yaw rate is greater than the ideal yaw rate and a difference between the actual yaw rate and the ideal yaw rate is greater than a fourth preset speed threshold; or
determining that the steering correction sub function of the vehicle is activated when the actual yaw rate is less than the ideal yaw rate and a difference between the ideal yaw rate and the actual yaw rate is greater than a fifth preset speed threshold.

13. The power control method for a vehicle according to any one of claims 5 to 12, wherein the driven wheels comprise the left front wheel, the right front wheel, the left rear wheel, and the right rear wheel, the axis at which the left front wheel and the right front wheel are located is the front axis of the vehicle, and the axis at which the left rear wheel and the right rear wheel are located is the rear axis of the vehicle; and
the wheel speed difference information comprises the first wheel speed difference between the left front wheel and the right front wheel, the second wheel speed difference between the left rear wheel and the right rear wheel, and the axis speed difference between the front axis and the rear axis; and
determining, according to the wheel speed difference information, the wheel speed correction amount of the torque allocation ratio of each driven wheel comprises:

determining a first correction amount of the left front wheel and the right front wheel according to the first wheel speed difference, determining a second correction amount of the left rear wheel and the right rear wheel according to the second wheel speed difference, and determining a third correction amount of the front axis and the rear axis according to the axis speed difference; and
determining a wheel speed correction amount of the left front wheel and the right front wheel according to the first correction amount and the third correction amount, and determining a wheel speed correction amount of the left rear wheel and the right rear wheel according to the second correction amount and the third correction amount.

14. The power control method for a vehicle according to claim 13, wherein

determining the first correction amount of the left front wheel and the right front wheel according to the first wheel speed difference comprises: determining the first correction amount of the left front wheel and the right front wheel according to the first wheel speed difference and a change rate of the first wheel speed difference when the first wheel speed difference is greater than the first preset speed threshold; and/or

determining the second correction amount of the left rear wheel and the right rear wheel according to the second wheel speed difference comprises: determining the second correction amount of the left rear wheel and the right rear wheel according to the second wheel speed difference and a change rate of the second wheel speed difference when the second wheel speed difference is greater than the second preset speed threshold; and/or
determining the third correction amount of the front axis and the rear axis according to the axis speed difference comprises: determining the third correction amount of the front axis and the rear axis according to the axis speed difference and a change rate of the axis speed difference when the axis speed difference is greater than the third preset speed threshold.

15. The power control method for a vehicle according to claim 14, wherein correcting the basic torque allocation ratio according to the wheel speed correction amount comprises:

subtracting the first correction amount from a basic torque allocation ratio corresponding to either of the left front wheel and the right front wheel whose wheel speed is larger, and adding the first correction amount to a basic torque allocation ratio corresponding to either of the left front wheel and the right front wheel whose wheel speed is smaller; and/or
subtracting the second correction amount from a basic torque allocation ratio corresponding to either of the left rear wheel and the right rear wheel whose wheel speed is larger, and adding the second correction amount to a basic torque allocation ratio corresponding to either of the left rear wheel and the right rear wheel whose wheel speed is smaller; and/or
respectively subtracting a half of the third correction amount from a basic torque allocation ratio of either of the two driven wheels corresponding to either of the front axis and the rear axis whose axis speed is larger, and respectively adding the half of the third correction amount to a basic torque allocation ratio of either of the two driven wheels corresponding to either of the front axis and the rear axis whose axis speed is smaller.

16. The power control method for a vehicle according to any one of claims 13 to 15, wherein

it is determined that the first correction amount is zero when the first wheel speed difference is less than or equal to the first preset speed threshold; and/or

it is determined that the second correction amount is zero when the second wheel speed difference is less than or equal to the second preset speed threshold; and/or

it is determined that the third correction amount is zero when the axis speed difference is less than or equal to the third preset speed threshold.

17. The power control method for a vehicle according to claim 5, wherein the lateral dynamic information is determined according to a relationship between an actual yaw rate and an ideal yaw rate of the vehicle.

18. The power control method for a vehicle according to claim 17, wherein the ideal yaw rate is determined according to a speed of the vehicle, a track width of the vehicle, and a front wheel rotation angle of the vehicle in a two-degree-of-freedom model.

19. The power control method for a vehicle according to claim 17 or 18, wherein the driven wheels comprise a left front wheel, a right front wheel, a left rear wheel, and a right rear wheel, an axis at which the left front wheel and the right front wheel are located is a front axis of the vehicle, and an axis at which the left rear wheel and the right rear wheel are located is a rear axis of the vehicle; and

determining, according to the lateral dynamic information, the steering correction amount of the torque allocation ratio of each driven wheel comprises:

determining, when the actual yaw rate is greater than the ideal yaw rate and a difference between the actual yaw rate and the ideal yaw rate is greater than a fourth preset speed threshold, a front axis oversteering correction amount, a rear axis oversteering correction amount, and a front and rear axis oversteering correction amount according to the difference between the actual yaw rate and the ideal yaw rate; or

determining, when the actual yaw rate is less than the ideal yaw rate and a difference between the ideal yaw rate and the actual yaw rate is greater than a fifth preset speed threshold, a front axis understeering correction amount, a rear axis understeering correction amount, and a front and rear axis understeering correction amount according to the difference between the ideal yaw rate and the actual yaw rate.

20. The power control method for a vehicle according to claim 19, wherein correcting the basic torque allocation ratio according to the steering correction amount when the actual yaw rate is greater than the ideal yaw rate and the difference between the actual yaw rate and the ideal yaw rate is greater than the fourth preset speed threshold comprises:

adding the front axis oversteering correction amount to a basic torque allocation ratio of a steered wheel at an inner side of either of the left front wheel and the right front wheel, and subtracting the front axis oversteering correction amount from a basic torque allocation ratio of a steered wheel at an outer side of either of the left front wheel and the right front wheel;

adding the rear axis oversteering correction amount to a basic torque allocation ratio of a steered wheel at an inner side of either of the left rear wheel and the right rear wheel, and subtracting the rear axis oversteering correction amount from a basic torque allocation ratio of a steered wheel at an outer side of either of the left rear wheel and the right rear wheel; and

adding a half of the front and rear axis oversteering correction amount to the basic torque allocation ratio of the left front wheel and the right front wheel, and subtracting the half of the front and rear axis oversteering correction amount from the basic torque allocation ratio of the left rear wheel and the right rear wheel.

21. The power control method for a vehicle according to claim 19 or 20, wherein correcting the basic torque allocation ratio according to the steering correction amount when the actual yaw rate is less than the ideal yaw rate and the difference between the ideal yaw rate and the actual yaw rate is greater than the fifth preset speed threshold comprises:

subtracting the front axis understeering correction amount from the basic torque allocation ratio of the steered wheel at the inner side of either of the left front wheel and the right front wheel, and adding the front axis understeering correction amount to the basic torque allocation ratio of the steered wheel at the outer side of either of the left front wheel and the right front wheel;

subtracting the rear axis understeering correction amount from the basic torque allocation ratio of the steered wheel at the inner side of either of the left rear wheel and the right rear wheel, and adding the rear axis understeering correction amount to the basic torque allocation ratio of the steered wheel at the outer side of either of the left rear wheel and the right rear wheel; and

subtracting the half of the front and rear axis understeering correction amount from the basic torque allocation ratio of the left front wheel and the right front wheel, and adding the half of the front and rear axis understeering correction amount to the basic torque allocation ratio of the left rear wheel and the right rear wheel.

**22.** The power control method for a vehicle according to any one of claims 19 to 21, wherein

when the actual yaw rate is greater than the ideal yaw rate and the difference between the actual yaw rate and the ideal yaw rate is less than or equal to the fourth preset speed threshold, it is determined that the front axis oversteering correction amount, the rear axis oversteering correction amount, and the front and rear axis oversteering correction amount are respectively zero; or

when the actual yaw rate is less than the ideal yaw rate and the difference between the ideal yaw rate and the actual yaw rate is less than or equal to the fifth preset speed threshold, it is determined that the front axis understeering correction amount, the rear axis understeering correction amount, and the front and rear axis understeering correction amount of the vehicle are respectively zero.

**23.** The power control method for a vehicle according to any one of claims 1 to 22, wherein the driven wheels comprise the left front wheel, the right front wheel, the left rear wheel, and the right rear wheel, the axis at which the left front wheel and the right front wheel are located is the front axis of the vehicle, and the axis at which the left rear wheel and the right rear wheel are located is the rear axis of the vehicle; and the method further comprises:

determining that the torque vector control function of the vehicle is activated when an accelerator pedal depth change rate obtained by pedaling an accelerator pedal of the vehicle is greater than a first preset accelerator pedal depth change rate threshold, or when an accelerator pedal depth change rate obtained by releasing the accelerator pedal is less than a second preset accelerator pedal depth change rate threshold;

determining that the torque vector control function of the vehicle is activated when a steering wheel rotation angle change rate of the vehicle is greater than a preset steering wheel rotation angle change rate threshold;

determining that the torque vector control function of the vehicle is activated when the lateral acceleration is greater than a preset lateral acceleration threshold;

determining that the torque vector control function of the vehicle is activated when a wheel speed difference between the left front wheel and the right front wheel is greater than the first preset speed threshold;

determining that the torque vector control function of the vehicle is activated when a wheel speed difference between the left rear wheel and the right rear wheel is greater than the second preset speed threshold;

determining that the torque vector control function of the vehicle is activated when the axis speed difference between the front axis and the rear axis is greater than the third preset speed threshold;

determining that the torque vector control function of the vehicle is activated when the difference between the actual yaw rate and the ideal yaw rate of the vehicle is greater than the fourth preset speed threshold; or

determining that the torque vector control function of the vehicle is activated when the difference between the ideal yaw rate and the actual yaw rate of the vehicle is greater than the fifth preset speed threshold.

**24.** The power control method for a vehicle according to claim 23, wherein the first preset accelerator pedal change rate depth threshold and the second preset accelerator pedal change rate depth threshold are determined according to the lateral acceleration of the vehicle, and the preset steering wheel rotation angle change rate threshold, the preset lateral acceleration threshold, the first preset speed threshold, the second preset speed threshold, the third preset speed threshold, the fourth preset speed threshold, and the fifth preset speed threshold are determined according to a current speed of the vehicle.

**25.** The power control method for a vehicle according to any one of claims 1 to 24, wherein the driven wheels comprise the left front wheel, the right front wheel, the left rear wheel, and the right rear wheel, the axis at which the left front wheel and the right front wheel are located is the front axis of the vehicle, and the axis at which the left rear wheel and the right rear wheel are located is the rear axis of the vehicle; and the method further comprises:

determining a torque allocation ratio of the front axis and a torque allocation ratio of the rear axis according to the vehicle required torque of the vehicle when the torque vector control function of the vehicle is not activated, evenly allocating the torque allocation ratio corresponding to the front axis to the left front wheel and the right front wheel, and evenly allocating the torque allocation ratio corresponding to the rear axis to the left rear wheel and the right rear wheel, to determine a second torque allocation ratio of the corresponding driven wheel; and

determining a second allocation torque of the corresponding driven wheel according to the vehicle required torque of the vehicle and the second torque allocation ratio of each driven wheel.

26. The power control method for a vehicle according to any one of claims 1 to 25, wherein the driven wheels comprise the left front wheel, the right front wheel, the left rear wheel, and the right rear wheel, the axis at which the left front wheel and the right front wheel are located is the front axis of the vehicle, and the axis at which the left rear wheel and the right rear wheel are located is the rear axis of the vehicle; and the method further comprises:

   when the accelerator pedal depth change rate obtained by pedaling the accelerator pedal of the vehicle is less than or equal to the first preset accelerator pedal depth change rate threshold a first preset accelerator pedal change rate threshold, or when the accelerator pedal depth change rate obtained by releasing the accelerator pedal is greater than or equal to the second preset accelerator pedal change rate threshold a second preset accelerator pedal change rate threshold;
   when the steering wheel rotation angle change rate of the vehicle is less than or equal to the preset steering wheel rotation angle change rate threshold;
   when the lateral acceleration is less than or equal to the preset lateral acceleration threshold;
   when the wheel speed difference between the left front wheel and the right front wheel is less than or equal to the first preset speed threshold;
   when the wheel speed difference between the left rear wheel and the right rear wheel is less than or equal to the second preset speed threshold;
   when the axis speed difference between the front axis and the rear axis is less than or equal to the third preset speed threshold;
   when the difference between the actual yaw rate and the ideal yaw rate of the vehicle is less than or equal to the fourth preset speed threshold; and
   when the difference between the ideal yaw rate and the actual yaw rate of the vehicle is less than or equal to the fifth preset speed threshold, determining that the torque vector control function of the vehicle is not activated.

27. A computer-readable storage medium, storing a vehicle power control program, and when the vehicle power control program is executed by a processor, the power control method for a vehicle according to any one of claims 1 to 26 being implemented.

28. A vehicle controller, comprising a memory, a processor, and a vehicle power control program stored in the memory and executable on the processor, and when the vehicle power control program is executed by the processor, the power control method for a vehicle according to any one of claims 1 to 26 being implemented.

29. A vehicle power control device, comprising:

   a first determining module, configured to determine, according to a dynamic load of each driven wheel of a vehicle, a first torque allocation ratio of each driven wheel when a torque vector control function is activated; and
   a second determining module, configured to determine a first allocation torque of the corresponding driven wheel according to a vehicle required torque of the vehicle and the first torque allocation ratio of each driven wheel,
   wherein when the corresponding driven wheel is driven according to the first allocation torque of each driven wheel and a steering wheel rotation angle of the vehicle is a set angle, a mapping curve between a turning radius and a lateral acceleration of the vehicle is a first curve, and an integral of the first curve over a set lateral acceleration interval is a first area,
   wherein if the torque vector control function is not activated and when the steering wheel rotation angle of the vehicle turns according to the set angle, a mapping curve between a turning radius and a lateral acceleration of the vehicle is a second curve, an integral of the second curve over the set lateral acceleration interval is a second area, and the first area is less than the second area.

30. A vehicle, comprising the vehicle controller according to claim 27.

If a torque vector control function is activated, determine a first torque allocation ratio of each driven wheel according to a dynamic load of each driven wheel of a vehicle

S110

Determine a first allocation torque of the corresponding driven wheel according to a vehicle required torque of the vehicle and the first torque allocation ratio of each driven wheel, where when the corresponding driven wheel is driven according to the first allocation torque of each driven wheel and a steering wheel rotation angle of the vehicle is a set angle, a mapping curve between a turning radius and a lateral acceleration of the vehicle is a first curve, and an integral of the first curve over a set lateral acceleration interval is a first area, where if the torque vector control function is inactivated and when the steering wheel rotation angle of the vehicle turns according to the set angle, a mapping curve between a turning radius and a lateral acceleration of the vehicle is a second curve, an integral of the second curve over the set lateral acceleration interval is a second area, and the first area is less than the second area

S120

## FIG. 1

Turning radius $R$

Constant-speed line $R=v^2/a_y$ ........

TV is inactivated – – –

TV is activated ——

Lateral acceleration $a_y$

Preset lateral acceleration interval $(a_{y1}, a_{y2})$

## FIG. 2

Determine a basic torque allocation ratio of each driven wheel according to a dynamic load of each driven wheel — S310

Determine, according to wheel speed difference information of a vehicle, a wheel speed correction amount of a torque allocation ratio of each driven wheel, and determine, according to lateral dynamic information of the vehicle, a steering correction amount of a torque allocation ratio of each driven wheel — S320

Correct the basic torque allocation ratio according to the wheel speed correction amount and/or the steering correction amount, to obtain a first torque allocation ratio of each driven wheel — S330

# FIG. 3

S501 Determine a ratio of a dynamic load of each driven wheel to total dynamic loads as a basic torque allocation ratio of the corresponding driven wheel

S502 Determine a first correction amount of a left front wheel and a right front wheel of a vehicle according to a first wheel speed difference and a change rate of the first wheel speed difference when the first wheel speed difference is greater than a first preset speed threshold

S503 Determine a second correction amount of a left rear wheel and a right rear wheel of a vehicle according to a second wheel speed difference and a change rate of the second wheel speed difference when the second wheel speed difference is greater than a second preset speed threshold

S504 Determine a third correction amount of a front axis and a rear axis of a vehicle according to an axis speed difference and a change rate of the axis speed difference when the axis speed difference is greater than a third preset speed threshold

S505 Subtract the first correction amount from a basic torque allocation ratio corresponding to either of the left front wheel and the right front wheel of the vehicle whose wheel speed is larger, and add the first correction amount to a basic torque allocation ratio corresponding to either of the left front wheel and the right front wheel of the vehicle whose wheel speed is smaller

S506 Subtract the second correction amount from a basic torque allocation ratio corresponding to either of the left rear wheel and the right rear wheel of the vehicle whose wheel speed is larger, and add the second correction amount to a basic torque allocation ratio corresponding to either of the left rear wheel and the right rear wheel of the vehicle whose wheel speed is smaller

S507 Respectively subtract a half of the third correction amount from a basic torque allocation ratio of either of the two driven wheels corresponding to either of the front axis and the rear axis of the vehicle whose axis speed is larger, and respectively add the half of the third correction amount to a basic torque allocation ratio of either of the two driven wheels corresponding to either of the front axis and the rear axis of the vehicle whose axis speed is smaller

S508 Correct the basic torque allocation ratio according to a wheel speed correction amount, to obtain a first intermediate torque allocation ratio

S509 Obtain an actual yaw rate and an ideal yaw rate of the vehicle

S510 Determine, when the actual yaw rate is greater than the ideal yaw rate and a difference between the actual yaw rate and the ideal yaw rate is greater than a fourth preset speed threshold, a front axis oversteering correction amount, a rear axis oversteering correction amount, and a front and rear axis oversteering correction amount of the vehicle according to the difference between the actual yaw rate and the ideal yaw rate

S511 Determine, when the actual yaw rate is less than the ideal yaw rate and a difference between the ideal yaw rate and the actual yaw rate is greater than a fifth preset speed threshold, a front axis understeering correction amount, a rear axis understeering correction amount, and a front and rear axis understeering correction amount of the vehicle according to the difference between the ideal yaw rate and the actual yaw rate

S512 Add the front axis oversteering amount to a basic torque allocation ratio of a steered wheel at an inner side of the left front wheel and the right front wheel of the vehicle, and subtract the front axis oversteering correction amount from a basic torque allocation ratio of a steered wheel at an outer side of the left front wheel and the right front wheel of the vehicle; add the rear axis oversteering correction amount to a basic torque allocation ratio of a steered wheel at an inner side of the left rear wheel and the right rear wheel of the vehicle, and subtract the rear axis oversteering correction amount from a basic torque allocation ratio of a steered wheel at an outer side of the left rear wheel and the right rear wheel of the vehicle; and add a half of the front and rear axis oversteering correction amount to the basic torque allocation ratio of the left front wheel and the right front wheel of the vehicle, and subtract the half of the front and rear axis oversteering correction amount from the basic torque allocation ratio of the left rear wheel and the right rear wheel of the vehicle

S513 Subtract the front axis understeering correction amount from the basic torque allocation ratio of the steered wheel at the inner side of the left front wheel and the right front wheel of the vehicle, and add the front axis understeering correction amount to the basic torque allocation ratio of the steered wheel at the outer side of the left front wheel and the right front wheel of the vehicle; subtract the rear axis understeering correction amount from the basic torque allocation ratio of the steered wheel at the inner side of the left rear wheel and the right rear wheel of the vehicle, and add the rear axis understeering correction amount to the basic torque allocation ratio of the steered wheel at the outer side of the left rear wheel and the right rear wheel of the vehicle; and subtract the half of the front and rear axis understeering correction amount from the basic torque allocation ratio of the left front wheel and the basic torque allocation ratio of the right front wheel of the vehicle, and add the half of the front and rear axis understeering correction amount to the basic torque allocation ratio of the left rear wheel and the basic torque allocation ratio of the right rear wheel of the vehicle

S514 Correct the first intermediate torque allocation ratio according to a steering correction amount, to obtain a first torque allocation ratio

FIG. 4

Determine a ratio of a dynamic load of each driven wheel to total dynamic loads as a basic torque allocation ratio of the corresponding driven wheel — S601

S602
Determine a first correction amount of a left front wheel and a right front wheel of a vehicle according to a first wheel speed difference and a change rate of the first wheel speed difference when the first wheel speed difference is greater than a first preset speed threshold

S603
Determine a second correction amount of a left rear wheel and a right rear wheel of a vehicle according to a second wheel speed difference and a change rate of the second wheel speed difference when the second wheel speed difference is greater than a second preset speed threshold

S604
Determine a third correction amount of a front axis and a rear axis of a vehicle according to an axis speed difference and a change rate of the axis speed difference when the axis speed difference is greater than a third preset speed threshold

S605
Subtract the first correction amount from a basic torque allocation ratio corresponding to either of the left front wheel and the right front wheel of the vehicle whose wheel speed is larger, and add the first correction amount to a basic torque allocation ratio corresponding to either of the left front wheel and the right front wheel of the vehicle whose wheel speed is smaller

S606
Subtract the second correction amount from a basic torque allocation ratio corresponding to either of the left rear wheel and the right rear wheel of the vehicle whose wheel speed is larger, and add the second correction amount to a basic torque allocation ratio corresponding to either of the left rear wheel and the right rear wheel of the vehicle whose wheel speed is smaller

S607
Respectively subtract a half of the third correction amount from a basic torque allocation ratio of either of the two driven wheels corresponding to either of the front axis and the rear axis of the vehicle whose axis speed is larger, and respectively add the half of the third correction amount to a basic torque allocation ratio of either of the two driven wheels corresponding to either of the front axis and the rear axis of the vehicle whose axis speed is smaller

Correct the basic torque allocation ratio according to a wheel speed correction amount — S608

Obtain an actual yaw rate and an ideal yaw rate of the vehicle — S611

S612
Determine, when the actual yaw rate is greater than the ideal yaw rate and a difference between the actual yaw rate and the ideal yaw rate is greater than a fourth preset speed threshold, a front axis oversteering correction amount, a rear axis oversteering correction amount, and a front and rear axis oversteering correction amount of the vehicle according to the difference between the actual yaw rate and the ideal yaw rate

S613
Determine, when the actual yaw rate is less than the ideal yaw rate and a difference between the ideal yaw rate and the actual yaw rate is greater than a fifth preset speed threshold, a front axis understeering correction amount, a rear axis understeering correction amount, and a front and rear axis understeering correction amount of the vehicle according to the difference between the ideal yaw rate and the actual yaw rate

S614
Add the front axis oversteering amount to a basic torque allocation ratio of a steered wheel at an inner side of the left front wheel and the right front wheel of the vehicle, and subtract the front axis oversteering correction amount from a basic torque allocation ratio of a steered wheel at an outer side of the left front wheel and the right front wheel of the vehicle; add the rear axis oversteering correction amount to a basic torque allocation ratio of a steered wheel at an inner side of the left rear wheel and the right rear wheel of the vehicle, and subtract the rear axis oversteering correction amount from a basic torque allocation ratio of a steered wheel at an outer side of the left rear wheel and the right rear wheel of the vehicle; and add a half of the front and rear axis oversteering correction amount to the basic torque allocation ratio of the left front wheel and the right front wheel of the vehicle, and subtract the half of the front and rear axis oversteering correction amount from the basic torque allocation ratio of the left rear wheel and the right rear wheel of the vehicle

S615
Subtract the front axis understeering correction amount from the basic torque allocation ratio of the steered wheel at the inner side of the left front wheel and the right front wheel of the vehicle, and add the front axis understeering correction amount to the basic torque allocation ratio of the steered wheel at the outer side of the left front wheel and the right front wheel of the vehicle; subtract the rear axis understeering correction amount from the basic torque allocation ratio of the steered wheel at the inner side of the left rear wheel and the right rear wheel of the vehicle, and add the rear axis understeering correction amount to the basic torque allocation ratio of the steered wheel at the outer side of the left rear wheel and the right rear wheel of the vehicle; and subtract the half of the front and rear axis understeering correction amount from the basic torque allocation ratio of the left front wheel and the basic torque allocation ratio of the right front wheel of the vehicle, and add the half of the front and rear axis understeering correction amount to the basic torque allocation ratio of the left rear wheel and the basic torque allocation ratio of the right rear wheel of the vehicle

Correct the basic torque allocation ratio according to a steering correction amount — S616

S617
A steering correction sub function is activated —No→

S609
A wheel speed correction sub function is activated —No→

S618
Correct the basic torque allocation ratio according to the steering correction amount, to obtain a first torque allocation ratio

Yes ↑ (from S617)

S610
Correct the basic torque allocation ratio according to the wheel speed correction amount, to obtain a first torque allocation ratio

Yes ↑ (from S609)

S619
Use the basic torque allocation ratio as a first torque allocation ratio

FIG. 5

Vehicle power control program

S601

Computer-readable storage medium 600

FIG. 6

Vehicle controller 700

Memory 701

Vehicle power control program 703

Processor 702

FIG. 7

800

First determining module 810

Second determining module 820

FIG. 8

1000

Vehicle controller 700

FIG. 9

## INTERNATIONAL SEARCH REPORT

| International application No. |
| --- |
| **PCT/CN2023/097457** |

| A. | CLASSIFICATION OF SUBJECT MATTER |
| --- | --- |

B60W 30/18(2012.01)i

According to International Patent Classification (IPC) or to both national classification and IPC

| B. | FIELDS SEARCHED |
| --- | --- |

Minimum documentation searched (classification system followed by classification symbols)

IPC: B60W

Documentation searched other than minimum documentation to the extent that such documents are included in the fields searched

Electronic data base consulted during the international search (name of data base and, where practicable, search terms used)

CNABS: VEN: CNTXT; USTXT; WOTXT; EPTXT; CNKI: 比亚迪股份有限公司, 杨冬生, 陆国祥, 冉晓, 转向, 转弯, 扭矩分配, 车速, 轮速差, 修正, 补偿, 转弯半径, 侧向加速度, torque allocation, controller, steering angle, speed, compensation, acceleration

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 1150568 A (HONDA MOTOR CO., LTD.) 28 May 1997 (1997-05-28) description, pages 3-10, and figures 1-6 | 1-4, 27-30 |
| Y | CN 1150568 A (HONDA MOTOR CO., LTD.) 28 May 1997 (1997-05-28) description, pages 3-10, and figures 1-6 | 5-7, 13, 16-18, 27, 28, 30 |
| Y | US 5740877 A (NISSAN MOTOR CO., LTD.) 21 April 1998 (1998-04-21) description, columns 2-5, and figures 1-3 | 5-7, 13, 16-18, 27, 28, 30 |
| A | JP H0717277 A (HONDA MOTOR CO., LTD.) 20 January 1995 (1995-01-20) entire document | 1-30 |
| A | US 2016023654 A1 (MAZDA MOTOR CORP.) 28 January 2016 (2016-01-28) entire document | 1-30 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **25 July 2023** | **27 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 644 202 A1**

| INTERNATIONAL SEARCH REPORT | International application No. |
|---|---|
| Information on patent family members | PCT/CN2023/097457 |

| Patent document cited in search report | | | Publication date (day/month/year) | Patent family member(s) | | | Publication date (day/month/year) |
|---|---|---|---|---|---|---|---|
| CN | 1150568 | A | 28 May 1997 | KR | 970015348 | A | 28 April 1997 |
| | | | | KR | 100227600 | B1 | 01 November 1999 |
| | | | | DE | 19637193 | A1 | 27 March 1997 |
| | | | | DE | 19637193 | B4 | 18 February 2010 |
| | | | | TW | 330182 | B | 21 April 1998 |
| | | | | CA | 2186444 | A1 | 27 March 1997 |
| | | | | CA | 2186444 | C | 02 November 1999 |
| | | | | US | 6076033 | A | 13 June 2000 |
| | | | | CN | 1059395 | C | 13 December 2000 |
| | | | | JP | H0986203 | A | 31 March 1997 |
| | | | | JP | H09123937 | A | 13 May 1997 |
| | | | | JP | 3573382 | B2 | 06 October 2004 |
| | | | | JP | 3660027 | B2 | 15 June 2005 |
| US | 5740877 | A | 21 April 1998 | JP | 3427529 | B2 | 22 July 2003 |
| | | | | DE | 19548928 | A1 | 27 June 1996 |
| | | | | DE | 19548928 | C2 | 25 November 1999 |
| | | | | JP | H08175208 | A | 09 July 1996 |
| JP | H0717277 | A | 20 January 1995 | None | | | |
| US | 2016023654 | A1 | 28 January 2016 | JP | 2016022885 | A | 08 February 2016 |
| | | | | JP | 6217931 | B2 | 25 October 2017 |
| | | | | DE | 102015008970 | A1 | 28 January 2016 |
| | | | | DE | 102015008970 | B4 | 12 April 2018 |
| | | | | US | 9290176 | B2 | 22 March 2016 |

Form PCT/ISA/210 (patent family annex) (July 2022)

**EP 4 644 202 A1**

**Patent documents cited in the description**

- CN 202211678720